# EUROPEAN PATENT SPECIFICATION

(11) **EP 1 303 795 B1**
(45) Date of publication and mention of the grant of the patent: **30.08.2006**
(21) Application number: 01949714.8
(22) Date of filing: 16.07.2001
(51) Int. Cl.: G03H 1/26, G02B 5/02, G02B 5/32

(54) **ACHROMATIC DIFFRACTIVE DEVICE**
ACHROMATISCHES BEUGUNGSELEMENT
DIFFRACTEUR

(30) Priority: 18.07.2000 GB 0017618; 22.08.2000 GB 0020724
(43) Date of publication of application: 23.04.2003
(73) Proprietor: Optaglio Limited, Hants SP10 4DU (GB)
(72) Inventor: DRINKWATER, John, Hants SP10 4DU (GB)
(74) Representative: Gill, David Alan
(86) International application number: PCT/GB2001/003186
(87) International publication number: WO 2002/006858

(56) References cited:
- US-A- 5 138 471
- US-A- 5 659 408
- US-A- 6 088 161
- US-A- 6 157 474
- TEDESCO J M: "HOLOGRAPHIC DIFFUSERS FOR LCD COCKPIT DISPLAYS" PROCEEDINGS OF THE SPIE, SPIE, BELLINGHAM, VA, US, vol. 2219, 1994, pages 327-337, XP000569218

## Description

This invention relates to the field of reflective image display devices designed to be viewed under reflected ambient lighting. The invention reveals specifically new novel achromatic diffractive optical elements and some new associated structures and features and novel manufacturing techniques for the same. These can be used to enhance the visibility of reflectively viewed display devices by the use of diffractive element, particularly to enhance the brightness of LCDs and similar displays.

Such reflective display devices include image providing display devices, such as liquid crystal display elements or other similar such devices. For the case of a transmissive type liquid crystal display, such devices are usually made viewable in reflection by backing them with a diffusing element. Typically this will be specular diffuser, although it is known to use holographic diffusers formed from reflection holograms or reflector backed transmission holograms, or reflective surface relief (embossed) holograms to directionally enhance the reflectivity.

Another type of image display device in the LCD display field uses light directly reflected from the active element of the display for viewing. This class of device would include typically TFT liquid crystal displays typically used for colour displays. In this class of these devices the basic liquid crystal display element is no longer transmissive but reflective, with the light typically being reflected straight off the active surface of the silicon wafer which is overlaid, after the liquid crystal-glass cover and electrode sandwich, with a polarising element. Normally such displays are viewed in directly reflected light from the silicon wafer. Some previous work has investigated micro-mirror (scale size 5 micron) and lithographic patterning techniques to structure the surface of the silicon to reflect light more in the direction of the normal viewing direction of an observer.

Some work on holographic elements to improve the reflectivity of display devices is also known. US5812229 outlines the use of volume holographic diffuser as reflective display elements - which disclose the provision of an improved brightness performance but only a monochrome colour replay due to the narrow spectral response inherent in the reflection holographic process. US 5659408 discloses another technique which can make the spectral response of the holographic diffuser achromatic (i.e. near white in appearance), a desirable property for both monochrome display elements but also particularly for colour displays done by using a transmission hologram diffuser backed by a reflector. In US 5659408 the transmission hologram is a volume transmission hologram backed by a plane reflective mirror (often made semi transparent to allow back lighting of the display). In US 5936751 the hologram is a full aperture achromatic (i.e. white replay) embossed hologram. This work discloses a way in which an embossed surface relief structure can be used to provide a white direction reflector of an image display by employing a full aperture exposure of the master hologram. However, the work does not recognise or address the issue of the usually sub-optimal reflected light intensity and diffraction efficiency of this type of element in that the full aperture embossed hologram suggested will inherently have low diffraction efficiency. This will be because of the multitude of superimposed spatial frequencies it contains in order to give a white appearance which reduce the efficiency of the structure due to fringe competition and also because the embossed holographic or diffractive elements envisaged are relatively simple surface relief diffractive devices and will therefore diffract equally into two diffracted orders, both +1 and -1, (and often more) thus effectively wasting up half of the light diffracted by the embossed hologram which fails to go into the desired diffractive order to be seen by the viewer.

Some known work describes ways in which a directional diffuser may be achieved by using a volume holographic transmissive optical element overlay to provide an alternative type of diffusing element. The advantage of this is that it would be capable of being added to any TFT LC display (or similar directly viewed image forming display device) as an adhesively bonded overlay at a late stage in the production process, avoiding the need for additional wafer fabrication stages in the liquid crystal display semi-conductor plant needed to form any micro optical elements in situ. The problem with using volume holographic elements is that volume elements have generally a narrow selection of replay angles and wavelengths over which they are efficient and generally use higher cost materials than alternative structures and normally have a narrow angular and spectral response, thus limiting the display brightness by limiting the usable input light, having a higher cost base, and sometimes material stability issues. Known work also uses achromatic effects formed from 3 volume holographic structures overlapping within the same medium, which will reduce the diffraction efficiency attainable.

Diffractive optical and holographic structures have also been used in the security field, and several types of optically variable diffractive devices are in use to prove the authenticity of items of value and to prevent their fraudulent duplication. Examples include banknotes, plastic cards, value documents such as fiscal stamps, travel documents such as passports and for the authentication of valuable goods. Devices based on the principle of optical diffraction are used for these purposes because they can produce, by the process of optical diffraction, an optically variable image with characteristic features such as depth and parallax (holograms) and movement features and image switches (purely diffraction grating devices and some holographic devices). These diffractive, optically variable image forming devices are used as anti-counterfeit devices both because their effects are highly recognisable and cannot be duplicated by print technologies, and because specific and difficult to replicate optical and engineering techniques are required for their production.

Diffractive optically variable devices for security applications are generally manufactured and form their effects based on holographic or diffraction grating techniques and are often manufactured as embossed surface relief structures as known in the art (e.g. Graham Saxby "Practical Holography" Prentice Hall 1988). They are typically applied to documents of value, plastic cards and articles of value to be protected in the form of holographic or diffractive hot stamping foil or holographic or diffractive labelling, often tamper evident. Teachings on holographic security structures can be found in US 5694229 and US 5483363. Teachings on the holographic origination and the origination by electron beam lithography of specialised holographic and diffractive security structures can be found in UK 0016358.4 and UK 0016359.2, the teachings of which are incorporated herein by reference.

It is usual to use the holographic reflective correction films in a reflective mode and there is often a requirement for use in a transflective mode. Here the reflector is substantially reflective to ambient light to enhance the brightness of the display in ambient lighting, and slightly transmitting to allow backlighting of the display by a back-light element. Thus is known a LCD image display device comprising a holographic transflector element that is capable of illuminating a display under reflected light in high ambient light conditions and capable of illuminating the display in transmission by the transmission through itself of internal edge lit light or back-lighting. Typically such a partially transmitting reflective layer would be formed by carefully controlling the coat thickness during metallisation of an aluminium film to provide a film that is substantially reflective and slightly (typically 10%) transmissive.

There are two problems with this approach, firstly that although the reflectivity remains relatively high, the transmissivity is essentially much lower than would be preferred, driving up the back-light power requirements which is a negative aspect for mobile display applications such as telecommunications where energy balance is important. Secondly, although it would be preferable to use a more transmissive device, as the thickness of the aluminium film is reduced to increase transmission the film becomes very absorbing so reducing both the reflectivity and transmissivity by absorption, making the system lossy. Thin metal layers, particularly aluminium are also prone to oxidation becoming grey in colour. Thus it is not really practical to obtain efficient higher transmissions than say 15% using aluminium without degrading significantly both reflection and transmission by absorption. Similar, but typically worse, characteristics apply to all such metals used as thin films, where the reflectivity / transmissivity balance is severely degraded by absorption.

An alternative method of approaching this issue described in US 5926293 avoids the absorption issue with thin metal layers by disclosing a holographic transflector provided with a pre-determined pattern of image forming light transmitting micro-holes formed by laser ablation used to both couple light out of the back-lighting element and also to form a graphical image visible to a viewer on the back-light display. Although this approach provides a useful extra graphical element to the display and also allows a higher transmission of the transmissive part of the device remains in place, so requiring a more powerful back light element with greater power consumption than would otherwise be needed. It is also possible to create micro-hole arrays by a process of chemical demetallisation, typically by either selectively coating the aluminium layer with alkali to selectively remove the metal film, or printing a protective mask over the areas of film to be retained and then using an alkali etchant to remove exposed metal areas. Again this process cannot overcome the issue of relatively low transmission of the transflector for reasonable reflection.

From EP-A-828203 there is disclosed an achromatic diffuser formed using individual cells for volume hologram reflection gratings which individual cells are provided so as to combine the replay of three small areas of volume holograms as coloured pixels so as to achieve an achromatic effect.

US-A-5659408 as discussed above, discloses the use of a single achromatic surface relief structure comprising a single element transmission surface relief arrangement. Practical limitations however disadvantageously arise in relation to US-A-5659408 which are sought to be overcome by the present invention.

According to an aspect of the present invention there is provided an achromatic diffractive diffuser comprising a plurality of discrete regions of individual surface relief diffractive devices, characterised in that each is of a size below the normal visual resolution of an observer and arranged such that, under illumination by ambient light, the superposition of the diffractive effects serves to provide a uniform achromatic diffuser reflection into a defined viewing zone for observation by an observer, and also such that the achromatic replay of the device has a non-symmetric distribution of diffractive light intensity between positive and negative diffractive orders such that the diffraction efficiency in the desired diffractive order is enhanced over that of the undesired order to provide an enhanced brightness achromatic device.

Preferably, there is provided an achromatic diffuse device for use as noted above wherein the achromatic diffractive replay of the device has a non-symmetric distribution of diffractive light intensity between positive and negative diffractive orders such that the diffraction efficiency in the desired diffractive order is enhanced over that of the undesired diffractive order to provide an enhanced brightness achromatic device.

The invention also provides for a holographic recording process for forming one or more of the devices defined herein and characterized such that the recording geometry is tilted to the normal such that both the object and reference beams approach the recording medium from angles of greater than 10° on the same side of the normal to the device, such that the recorded diffractive device has a symmetric, e.g. generally blazed, microstructure.

Preferably, the elemental diffractive areas consist of non-overlapping diffractive elements characterized such that each is below normal eye resolution and further characterized such that upon illumination with white ambient light, each diffractive element has a diffractive replay forming a localised defuse image in one plane of the device and forming a second image defining a viewing window away from the device and of the same form as that produced by a rainbow hologram, and yet further characterized such that the rainbow diffractive replays from the devices superimpose such that the diffractive replays provide an achromatic effect for a viewer.

Further, the individual diffractive devices forming the achromatic diffractive device are non overlapping and have a size less that 250 microns. In particular, the size of the individual elements can be preferably in the range of 20 to 100 microns.

Advantageously, the device consist of at least three non overlapping rainbow diffractive replay diffusing diffractive elements.

The elements can preferably be arranged in the form of lines such as curved lines, or can be arranged in the form of polygons, rectangles or other appropriate shapes.

In particular, the relative areas of each elemental device can be adjusted to provide for an achromatic replay.

Further, the relative areas of each element device can be adjusted to provide for a colour hue replay.

In particular, the relative diffraction efficiencies of each elemental area can be adjusted to provide an achromatic replay or can be adjusted to provide for a colour hue replay.

The invention can advantageously be further characterized by the provision of an additional visual diffractive graphical image visible to an observer under white light illumination.

The visual graphical image can advantageously be viewable under white light illumination at a different replay angle from the main diffuse image; advantageously becoming visible upon tilting the display device in a vertical or horizontal plane.

In particular, the image becomes viewable upon rotating the display device in the said plane and through substantially 90°.

Preferably, the diffractive elements corresponding to the visual diffractive image occupy spatially discrete regions of the surface of the device and are non-overlapping with the achromatic display regions. In particular, the elemental regions are provided below the resolution of the human eye.

Advantageously, the device consists of at least three non-overlapping rainbow diffractive replay diffusing diffractive elements and at least one set of non-overlapping diffractive elements corresponding to a visual image viewable under white light illumination by an observer from a different direction to the achromatic viewing zone.

Advantageously, the areas of the device not occupied by visual diffractive elements are left unused and are arranged not to contribute to the diffractive replay such that the achromatic replay of the overall diffractive device is entirely uniform.

Preferably, the device is further characterized by being arranged to provide an additional diffusing replay visible outside the diffractive achromatic viewing zone.

Preferably, the device consists of at least three non-overlapping rainbow diffractive replay areas, the summation of whose diffraction provides an achromatic image, further comprising a set of elements corresponding to a diffusing image, wherein the diffusing elements are non-overlapping and spatially separate from the diffractive elements.

In particular, the diffractive elements are arranged to form a graphical image visible on at least some of the display device and which does not degrade the uniformity of the diffractive achromatic replay.

According to a particularly important aspect, the non-overlapping rainbow defusing diffractive elements have an asymmetric form and asymmetric diffractive efficiency such that the desired achromatic diffractive replay is enhanced over the undesired diffractive replay.

Preferably, the device is holographically originated in a geometry to record a symmetric structure substantially as described herein and such that, in the recording geometry, the object and reference beams approached from the same side of the normal to the medium and to record a blazed, e.g. asymmetric, structure.

The invention also provides for a method of recording a blazed asymmetric structure characterized by holographically originating the structure to record asymmetric structure and as defined above.

Advantageously, the method further comprises the use of an achromatic diffuser consisting of at least three elements each having an asymmetric rainbow holographic replay.

Preferably, the various aspects of the present invention are further characterized in that the achromatic viewing zone replay is adjusted at the margins thereof having regard to intensity and viewing angle and serving to adjust elements of the replay of the diffractive device.

Preferably, within the various aspects of the present invention, the elemental diffractive structures that define a viewing window in the device form a rainbow hologram which can be originated by a process of electron beam lithography.

Advantageously, the elemental diffractive elements have an asymmetric diffraction distribution serving to enhance the desired achromatic replay direction.

Also, the elemental diffractive areas of the various aspects of the present invention consist of non-overlapping diffractive elements characterized such that each is below the resolution of the human eye and further characterized in that, upon illumination of white ambient light, the replay of the diffractive elements superimpose to form an achromatic image for an observer in a defined viewing zone.

Preferably, the diffractive elements comprise diffraction gratings. These diffraction gratings can advantageously be symmetric, e.g. blazed, and so serve to enhance the desired diffractive replay to enhance the brightness of the device.

Advantageously, the elemental diffractive devices are arranged in sub areas such that each sub-area produces an achromatic diffractive replay by superposition of the diffractive beams.

The viewing zone produced by the said sub-area diffractive elements can advantageously vary across the device according to position and to ensure the same diffracted view zone is produced by all elements of the device despite their different spatial patterns.

Advantageously the relative areas of the diffractive structures are adjusted to achieve a desired achromatic replay or colour hue.

The dimensions of the sub-areas are preferably 250 microns or less.

Advantageously, the sub areas consist of several diffraction gratings or diffractive areas having a scale size of 20 to 100 microns and having orientations and pitches which are adjusted to provide an achromatic replay into the desired viewing zone.

The diffractive structures advantageously comprise blazed asymmetric diffractive gratings.

In particular, the sub-areas or elemental areas are arranged as rectangular or polygonal shapes, or indeed as lines including curved lines.

As noted, the device advantageously consists of at least three different diffractive elements.

Advantageously, the device consists of between 25 and 150 diffractive elements per sub-area and wherein each is characterized by variations in pitch and orientation.

Advantageously, the elemental diffractive areas are non-overlapping.

Advantageously, the device can include three curved line structures, each curved line structure comprising a linear diffraction grating and the extent of the curve of the structure serves to define a horizontal view angle for the device and the size of the non-overlapping line being below resolution by the human eye.

Preferably the device can include visual diffractive graphic message which can be provided in a localised area and can arrange to compensate achromatic serves to retain uniformity within the device.

Preferably, the device includes diffusing elements and further arranged to provide achromatic and controlled diffusion to increase the viewing angle, the diffusing elements being spatially separate and offering a message compensating achromatically by not employing those areas so as to keep the diffraction uniforms.

Advantageously, the method of the present invention includes the step of employing direct light electron beam lithography for forming the device.

As will be appreciated, the aforementioned sub-areas are advantageously each optimised diffraction grating structures which are below resolution by the human eye and in which the replay is superimposed in order to provide a white light effect. In particular, the sub-areas beneath the human eye resolution of, for example 250 microns, are themselves composed of other small areas in the region of 25 microns to provide achromatic areas.

Advantageously, the grating pitches and/or orientation of the device can be varied to achieve the required achromaticity. The advantages can be achieved through a close packed optimised structure.

It will therefore be appreciated that this invention, describes a new class of devices for use as high efficiency achromatic diffractive diffusing reflectors, both for use behind image display devices and as overlays, that provide high gain directional reflective light control films for use with image display devices such as LCDs. These devices also have a number of other advantageous properties. A number of other new associated techniques for display enhancement and back-lighting are also described. Particular confirmatory aspects are as follows.

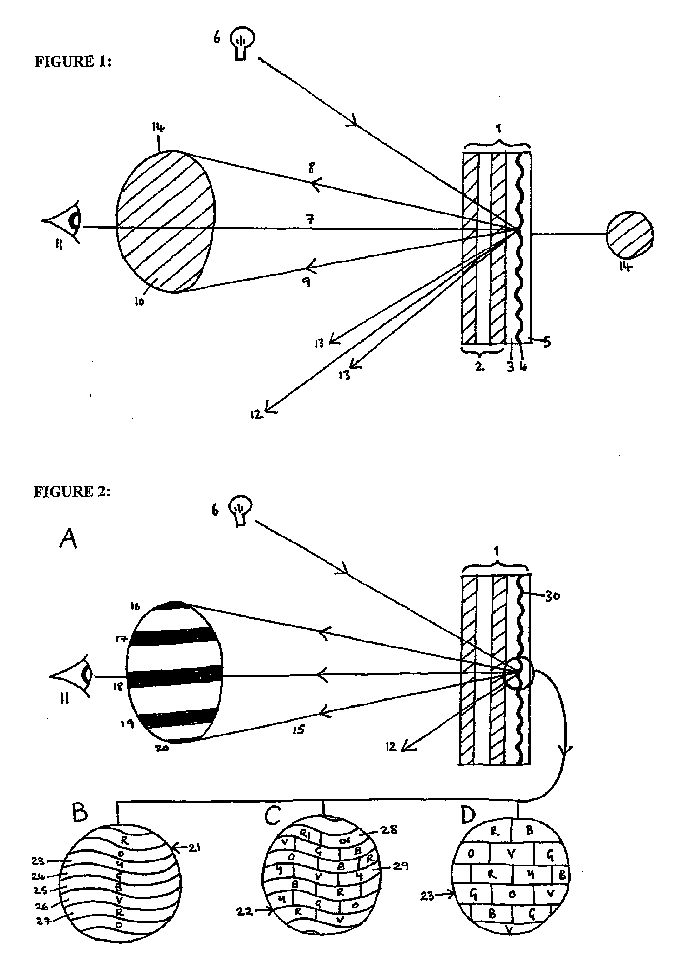

**Sections 1 and 2 :** Here, new types of enhanced higher efficiency and otherwise improved holographic and diffractive devices for use typically as reflective holographic enhancement film are proposed, particularly for display applications, and characterised as achromatic diffractive device, made up of many non overlapping individual elements of a size beneath the normal eye resolution the sum of whose diffracted images creates the achromaticity of the device. Such devices can also have non classical diffractive replay (blazed), providing an enhanced reflectivity in the desired diffracted order. These new devices are holographically (Section 1) generated or directly written by electron beam lithography, (Section 2) for use as optical enhancement elements for image providing display elements such as liquid crystal displays to enhance the brightness and visibility of such displays when viewed in reflection ambient lighting conditions. Also disclosed is the creation of new features on such devices allowing new and improved properties and methods of creating the same (Sections 1 & 2). Figure 1 shows an image display device such as an LCD display diffractive or holographic diffuser of this type, showing an image display device (2) with a laminated rear diffusive element (3,4,5), which under ambient illumination, normally from a white light source above the device(6) diffracts light into a viewing cone normal to the device (10,14) for an observer (11). The reflected light (12) and specular scatter as applicable (13) is reflected off the face of the device. (13) shows the dominant direction of reflected scatter in the absence of a non classical diffuser showing that with conventional devices only a small proportion of the scattered light reaches the viewer's eye.

It should be appreciated that the invention can provide for an achromatic diffuser comprising a surface relief diffractive device arranged such that, under illumination by ambient light, the diffractive effect serves to provide a uniform achromatic diffuser reflection into a defined viewing zone for observation by an observer, and also such that the achromatic diffractive replay of the device has a non-symmetric distribution of light intensity between positive and negative diffractive orders such that the diffraction efficiency in the desired diffractive order is enhanced over that of the undesired order to provide an enhanced brightness achromatic device. The surface relief diffractive device may comprise a synthetic computer generated diffractive device and may be made by the method of direct writing of the diffractive structure by means of electron beam lithography. Also, the surface relief structure may comprise a holographically generated structure. Indeed, the structure may be holographically generated to provide an asymmetric diffraction efficiency by exposing a light sensitive recording medium to laser light comprising a reference beam and a diffused, scattered or projected object beam, characterised such that both reference and object beams are incident on the recording medium from the same side of the normal, such that the resulting surface relief structure has an asymmetric profile and asymmetric diffraction efficiency enhancing the desired diffractive replay.

**3 :** A new holographic or diffractive transflector correction film with both high transmission and high reflection, comprising a set of micro-holes for transmission in perfect register at the focus of a set of micro-lenses for light concentration, and a method of straightforward manufacturing of the same by in-situ laser ablation. Also disclosed are devices that have the position of micro-holes and transmissivity progressively altered through the array to homogenise the display for any variations in back-lighting display.

**4 :** A new holographic transflector device comprising a graphic incorporated into the reflective layer visible in direct specular reflection with a uniform reflective brightness with gain from the achromatic diffractive device obtained by compensating this device for variations in absorption or reflectivity. Also a method by which a two colour metallic device can be created for reflective graphics without degrading the information display performance, also a methods of creating printed graphics and compensating for the effects of these.

**5 :** A new class of back-lighting elements consisting of back-light formed of a holographic or diffractive light output coupler from a side lit element, in one form using the achromatic diffractive diffusing device to provide an achromatic back-light effect and altering this device using one of several origination or demetallisation methods to homogenise the display. Also a similar hybrid device comprising a compound achromatic diffractive device to both enhance the display with gain in reflected ambient light and to couple out and re-direct side or back-lit light for reduced light illumination of the display.

**6 :** This relates to a way to create a directional diffuser enhancement overlay by using a surface relief transmissive optical element overlay. The achromatic diffractive element could be made transmissive by replacing the metal reflector layer with one or more layers of high refractive index material to produce a transmissive diffractive element. Suitable materials could be high refractive index materials such as zinc sulphide and titanium dioxide. A new surface relief diffractive enhancement overlay film is described, using the achromatic diffractive devices of section 1 and 2, together with various other techniques such as variable fill areas of a size below the eye resolution and the incorporation of optical power into the devices to produce improved diffractive overlay reflection films.

The invention and these new devices are described in more detail as follows:

Section 1 and 2 of this invention relate to the use of enhanced holographic and diffractive devices, typically holographically generated or directly written by electron beam lithography, as optical enhancement elements for image providing display elements such as liquid crystal displays to enhance the brightness and visibility of such displays when viewed in reflection ambient lighting conditions.

The present invention overcomes the limitations in the prior art to increase the efficiency and to add new effect to these devices in a number of ways.

**1 :** To increase the optical efficiency by creating a new type of more efficient holographic light control film using an enhanced achromatic diffractive optical element for use as reflective diffusing elements using several special techniques: firstly to reduce fringe competition which reduced the diffraction efficiency and hence reflectivity of previous devices, and secondly additionally enhancing the efficiency of these special achromatic diffractive optical elements utilising a number of techniques to provide an asymmetric diffraction efficiency to enhance the desired diffraction order replay efficiency.

**1.1 :** The first aspect of this invention is to reduce fringe competition and the resulting efficiency reduction in these achromatic structures to creating a new class of achromatic diffractive diffusers by creating an achromatic replay from diffractive device without degrading the appearance or apparent uniformity of achromaticity by using the overlapping replay of several (at least 3) rainbow holographic elements, each recorded into a separate small areas of the recording medium, with each area designed to be beneath the normal resolution of the unaided human eye to retain a uniform appearance without structure, the structures arrange desirably in repeating narrow lines, one element in each period for each rainbow element of the holographic replay. These areas could be linear or desirably curved to reduce any appearance effects. The relative area of each element (using repeated small areas of a size not visible to the unaided eye typically 20 to 100 micron, less than 250 micron) each adjusted for relative area to accommodate for changes in diffraction efficiency between different pitches of gratings and to compensate for variations in embossing efficiencies of the various spatial frequencies.

This arrangement is shown in Figure 2A, showing overlapping rainbow replays (16,17,18,19,20) forming an achromatic effect from a reflective achromatic diffractive structure (30) located behind the display device. Figure 2B shows a linear and curved arrangement of individual areas on a magnified scale showing the non overlapping individual replay areas (23,24,25,26,27) corresponding to the individual rainbow elements, each at a scale size beneath the normal eye resolution. Figure 2C shows an alternative shaped arrangement of curved pixels less preferable for a holographic approach.

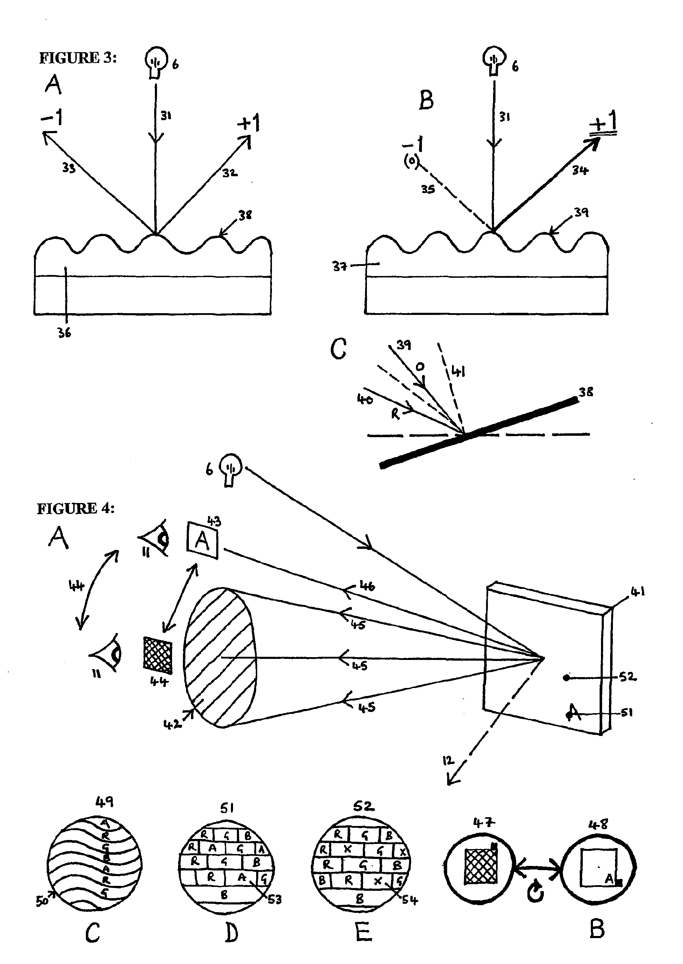

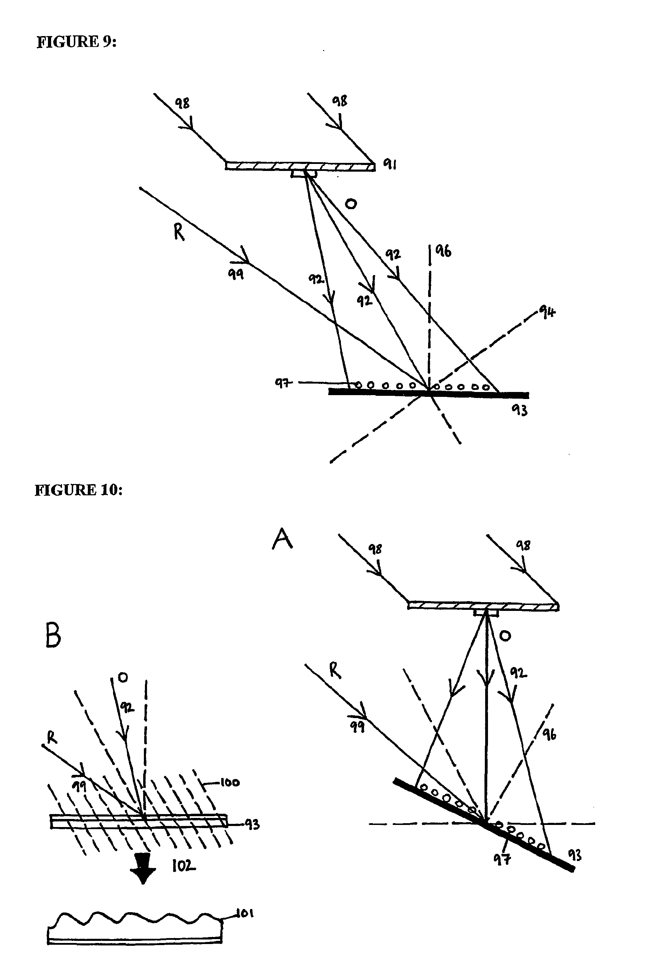

**1.2 :** Another aspect of this invention, that can be used independently, is to increase the optical efficiency of achromatic diffractive diffusers by enhancing the efficiency of transmissive enhancing elements for reflective displays by the use of surface relief structures and particularly by the use of surface relief structures created in a way that provides an achromatic replay but reduces previous fringe competition and also by using surface relief structures with an enhanced diffraction efficiency into the desired diffraction order. These elements are recorded as non classical blazed (asymmetric) optical elements with a diffraction efficiency enhanced in the desired diffractive order by forming substantially asymmetric structures by recording the each element in a tilted substrate geometry, as discussed in section 1.6, with both object and reference beams approaching the substrate from the same side of the normal. The structure of this device is disclosed plus a method of recording these devices holographically is disclosed, by using a recording substrate tilted to ensure both object and reference beams are incident on the final recording medium from the same side of the normal as shown in Figure 3 A, B, C. Figures 9 and 10 relating to a detailed description of the holographic exposure technique as explained in Section 1.6 show detailed holographic recording geometry for forming asymmetric (blazed) holographic structures suitable for use in this invention. Section 2 discloses as is a second method of using electron beam lithography to pre-calculate and then write structures that replay in a way similar to rainbow holographic areas, it being appreciated that electron beam lithography provides a very good method for producing blazed structures.

**1.3 :** Another aspect of the invention, that can be used independently, is to add new effects and features to these achromatic diffractive diffusers devices by using an achromatic diffractive device and a method made according to the first and second methods (Section 1.1.and 1.2 above) above but additionally incorporating a visual holographic or diffractive image (for perhaps promotional or anti-counterfeit uses) into the achromatic diffractive element in a way that does not result in a visual degradation of the diffusing element. This can be done by using an additional set of small repeated areas within the structure in addition to the localised areas used for the different diffractive areas contributing to the achromatic replay of size beneath the resolution of the unaided eye, part of which area can be utilised by the display diffractive device or hologram as appropriate. At this point the achromatic diffractive structure may consist of periodically repeating line of say 3 colour 'red', 'green', 'blue' rainbow slits used to form the achromatic effect (or more as appropriate for uniformity) plus an additional element in part not used and in part used for the diffractive or holographic structures such that these always occupy on a microscopic scale a unique area to enable the achromatic device to be uniform and to avoid local degradation of the achromatic device in areas corresponding to the additional visual diffractive image.

Figure 4A shows the arrangement by which an achromatic diffractive diffuser can also replay a visual diffractive image visible at a different angle on vertical tilting or rotation, Figure 4B, with Figure 4C showing how this could be organised into a holographic device without degrading uniformity of replay by replacing part of the individual diffractive structure with the imaging structure for the visual replay (50, A).

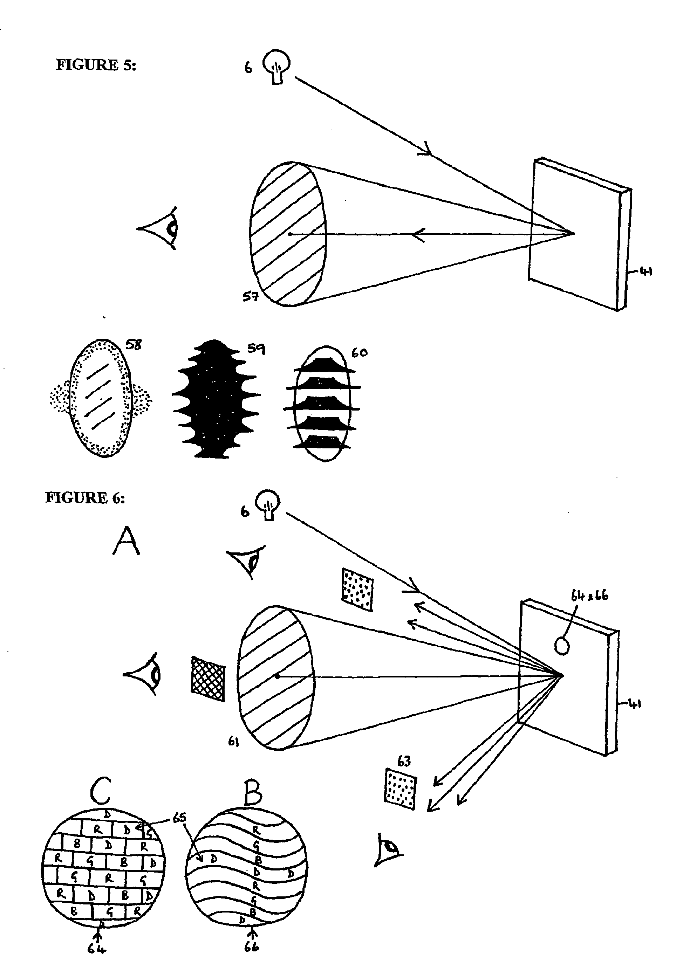

**1.4 :** Another aspect of the invention, that can be used independently, is to improve the viewability of devices as in Sections 1.1 and 1.2 and 1.3 and in particular to soften the often sharp cut off of the viewing zone due to the holographic replay which can be disturbing to observers by using a technique of half tone masking or otherwise reducing the area (e.g. line masking) the edge of the viewing zone to soften the edge of the virtual window being relayed into a viewer's eye to provide less efficiency but a slightly wider replay zone at the sides of the viewing zone to soften the virtual window effect but to enable more efficiency to be available at the centre of the view zone. In particular the replay efficiency can be continually varied across the view zone to optimise the centre brightness at the partial expense of a slight reduction in observed brightness at the edge of the view zone to enhance centre line brightness as the overall diffraction efficiency of the device will be limited to a constant value. This invention is applicable to a single achromatic diffuser consisting of many overlapping interference fringe structures as in Figure 5 (59) to form an output virtual viewing cone as shown in Figure 5 where the overall intensity profile can be more closely controlled than in previous devices. This technique is also applicable to devices as in section 1.2 and 1.2 and 1.3 where the view zone, angle of view and degree and sharpness of fade off can be usefully controlled.

Figure 5 shows various possible arrangements by which the viewing zone can be adjusted with half-tones (58), variation in output cone shape shown (59) for the case of a single achromatic diffusing structure, or a multiple structure in different regions replaying overlapping rainbow effects (60).

**1.5 :** It can also useful to incorporate some general diffusion and scatter into such devices in order to improve the general diffusing properties to improve the 'off diffractive replay' visibility. Hence another form of this addresses the issue of the balance between diffractive replay efficiency from the surface relief achromatic metallised holographic element and general diffusion, as the diffraction structure which to provide enhanced reflectivity within the cone angle of holographic replay, but can produce very little brightness (less than a conventional reflector) when viewed outside this viewing zone because such devices tend to exhibit less general scatter than standard diffusers. A method of overcoming this disadvantage is to use a holographic device containing additional elements to produce a controlled diffusing effect, the balance of the achromatic holographic and diffusion area being to provide a general level of viewability when the viewer's eye is outside the diffractive replay cone. This would involve extending the holographic of generating achromatic diffractive structures by creating a structure with some additional degree of diffusion by taking the achromatic holographic device consisting typically of curved lines of repeated (at least 3) rainbow holographic elements, each recorded into a separate small areas of the recording medium, (with each area designed to be beneath the normal resolution of the unaided human eye to retain a uniform appearance without structure, the structures arrange desirably in repeating narrow lines, one element in each period for each rainbow element of the holographic replay) and adding into the periodic structure a diffusing element made by exposing the device in one exposure of recording holographically by exposing to solely an object beam to provide a diffusing structure. The relative size of each element would be typically repeated small areas of a size not visible to the unaided eye typically 10 to 75 micron, and less than 250 micron). However, although it is theoretically possible to produce this hybrid structure using holographic techniques in practice it would be difficult to produce a highly efficient device due to the difficulty of maintaining good quality focus on fme line structures which would cause the diffusing structure to degrade the other diffracting structures and the difficulty of holographically producing sharp aspect ratio structures.

Figure 6A shows the optical characteristics of an image display device (41) with such an element showing a bright achromatic diffractive view zone (61), with significant diffractive gain into a viewer's eye over and above a diffusing device, displaying a degree of classical diffusion from the surface (63, 62) to provide a degree of off view zone visibility to improve general visibility. The microscopic structural arrangement for achieving this is shown in Figure 6B where a proportion of the individual elements of the diffractive device is replayed by specialised diffuser device.

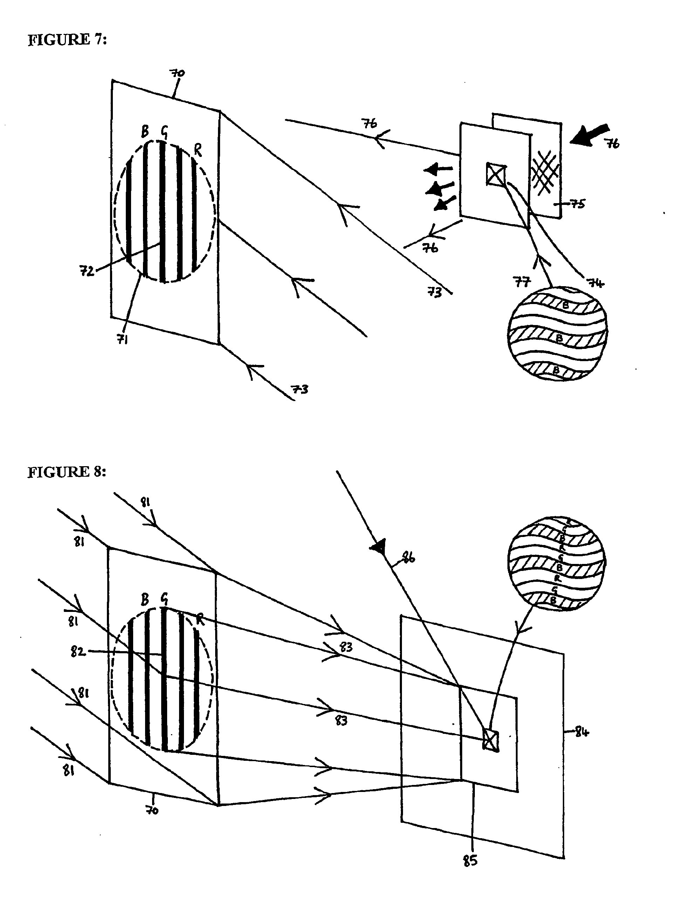

**1.6 :** A suitable form of originating the achromatic diffractive surface relief structures described here in section 1 of this invention is a specialised form of the holographic recording process using an H1 - H2 process as known in the art and as referenced, by recording a surface relief image typically into photoresist. These methods are shown in Figure 7,8,9 and 10. To produce these devices this process would be adapted to use a process where several rainbow slit masters (71,72) or small area masters (for diffraction grating or narrow angle replay effects or several small short rainbow masters calculated to provide the correct final replay view zone required for the device) are exposed sequentially, probably on the same recording medium such as a silver halide plate or photopolymer (70), to the artwork for each element (74), and offset to provide the correct replay angle condition for achromatic replay on viewing under white light as shown in Figure 7. In an alternative method several separate H1's and several superimposed H2 recordings to different reference beam angles can be used to give the same result) to give an achromatic replay by colour mixing of the diffracted light, to several (at least 3) artwork separations. Each artwork separation (74) will correspond to one elemental diffraction rainbow element in the final diffractive device and the artwork elements will be designed to closely inter-lock on a microscopic scale (77 - showing a magnified area of one segment) such that on playback at the H2 stage to form the final device the individual diffractive elements on a microscopic level are non overlapping and occupy closely packed discrete areas of the device on a microscopic scale (lines or curved line structures preferably parallel to the long axis of the master rainbow slit are a very suitable form of structure as they reduce the alignment tolerance in one direction. (77)). The artwork elements and elemental diffractive structures will also be characterised such that the size of any individual element is below the normal resolution of the human eye - typically in the range 25 micron to 250 micron, but preferably 25 micron to 100 micron. In a standard recording geometry one beam, typically the object beam (76), will be organised to be normal to the recording H1 plate, or perhaps the object and reference beams would be offset to be symmetric about the normal. A useful method for recording non classical or blazed diffraction structures is to tilt the object plane through a pre-calculated angle such that the final H2 recording geometry can be organised in such a way as to record blazed structures. Two methods for recording blazed structures (101) are shown in Figures 9 and 10A where the typical H1 (91) - H2 (93) projection process as known in the art has been altered to have the final recording plane tilted such that both object (92) and reference (99) beam for the H2 (93)stage approach from the same side of the normal (6) as shown in Figure 10B- this tilted geometry produces an interference fringe (100) pattern with a normal running at an angle to the normal to the recording material (93) thus generating, upon development of the photoresist, an asymmetric surface relief fringe structure as shown (101) which has the desired diffractive order enhanced over the undesired diffractive order. (However, devices consisting of overlapping fringe patterns from several holographic recordings cannot be blazed to obtain the same efficiency as well as structures where the individual carrier grating areas are spatially separated to reduce degradation due to fringe competition). In this device the system is further specialised by the need to replay several elemental diffraction structures in tight register - a useful way to achieve this would be to create an H1 or several elemental H1's from a small proportion of the artwork - these would then be reconstructed in register e.g. over a small region of the device or a small strip parallel to the rainbow slit direction, which can then be multi-exposed stepped and repeated to generate the full device. FIGURE 9 and 10A shows this recording process. Of course addition exposures would be used in this step to form addition elemental H1's for any of the other features of this invention such as the incorporation of additional graphical images.

FIGURES 7,8, 9 and 10A show one potential manufacturing process illustrating the H1 to H2 recording process for manufacturing a 'Benton' or rainbow hologram as known in the art adapted to suit this process. FIGURE 7 illustrates schematically the recording of an H1 hologram (72,71)of an object (74) consisting of an aperture mask defining the artwork element rear illuminated by laser light (76) and diffuser (75) and Figure 8, 9 and 10A illustrates the H2 transfer process. Figure 6 illustrates the transfer process as known in the art to take the H1 (25) as recorded in Figure 5, re-illuminate it with a reference beam (30) conjugate to the original reference beam to thus reconstruct a real projected image (34) of the original object (31). In the H2 transfer process as shown In figures 8, 9, 10A the second recording medium (93) is typically for an embossed hologram or diffractive element a material capable of recording a diffractive image as a surface relief structure and would typically be a photoresist material. A second reference beam is then introduced (99) to record a second or H2 hologram. In the case of this invention to achieve asymmetric blazed structures the second H2 recording plane would be rotated around an axis perpendicular to the plane containing the reference beam and centre-point of the object beam as per Figures 9 and 10A. A compensating tilt would have been put on the original artwork object recording plane to facilitate this. It can be appreciated that several such devices can be superimposed or recorded adjacent to each other and that one H1 containing several such recordings or several H1's or a mixture of projection and other masking techniques as known in the art (e.g. US 4918469, US4717221, US4629282). To form an embossed hologram the H2 hologram formed in photoresist would be silvered to deposit a conductive layer, copied probably several times in a plating process as known in the field to form metal copies of the structure and then roll embossed into a plastic material or embossing lacquer or hot foil material or similar or similar and then metallised to form an embossed hologram as known in the art.

FIGURE 9 and 10A illustrate how the process illustrated in Figures 5 and 6 may be adapted for recording the device taught in this invention. In this illustration a standard H1 would be recorded as in Figure 7 to tilted object artwork consisting of one element of a fine line or patch structure beneath the eye resolution. On transfer at the H2 stage on reconstruction with the reference beam (99) and exposure to the object beam from typically but not exclusively several specialised rainbow or 'Benton' slits the achromatic diffractive diffuser diffractive is recorded by replacing the conventional H2 object-reference beam geometry with an geometry incorporating a tilted H2 recording plane as shown In Figures 9 and 10A (matched to the tilted object plane in the H1 recording) to from a blazed asymmetric grating structure. If required half tone or other forms of masks could be placed over the projecting rainbow slits to provide close control of the intensity distribution replayed by the device into the viewer's eye to control fade off and angular intensity profiles as per Section 1.4. It can be appreciated that the recording methods above are not exhaustive descriptions and that for example, an alternative technique as known on the art would be to use an image plane mask over the photo-resist H2 plane to define the area of artwork to be exposed and to replace the masked H1 of Figures 8, 9,10 with a masked diffuser using a similar process to US 4918469, US4717221, US4629282 for example.

2 : Another extremely advantageous part of this invention is to provide for a method of making the achromatic diffractive devices of section 1 and also improved achromatic diffractive devices by a method of pre-calculation and direct writing of the microstructure using electron beam lithography to create of the diffractive structure. A very suitable method of achieving this is to use electron beam direct write lithography to create the diffractive structures which allows additional control and a number of additional possibilities and improvements. This can be done in a number of ways with a number of embodiments but all are characterised by producing a diffractive achromatic (white) diffractive effect replaying into a defined customizable viewing zone.

**2.1 :** One embodiment using pre-calculated and directly written structures will utilise the ability of electron beam lithography (or other forms of very high resolution lithography) to write highly efficient asymmetric (blazed) structures which enhance the diffraction efficiency in the desired diffractive order over that which would be possible with traditional sinusoidal structures. This first device would use areas of plain diffraction gratings of different pitches, all of the areas of a size beneath the normal resolution of the human eye, each an asymmetric structure optimised in terms of slope angle and groove depth to obtain the maximum possible diffraction efficiency possible with this type of structure. Several pitches of such device would be used to provide a red, green, blue replay effect (although more pitches may give a better achromatic effect and this possibility is included) that would colour mix to provide a white achromatic replay. These elemental areas, each an optimised diffractive structure for its pitch, would be laid down in areas and the relative area of each elemental grating would be adjusted to compensate for the relative efficiencies of each grating to obtain a white achromatised replay. In addition to obtaining a white replay in the vertical direction of viewing (with grating lines substantially horizontally orientated as relative to an viewer observing the device) it is necessary to obtain the desired horizontal view angle on the device so that some of the grating areas would be rotated in orientation and also adjusted in pitch to produce this effect.

The main principle is that each sub area of grating is blazed to achieve its maximum diffraction efficiency and then the area fill factor for each type of device is adjusted to produce the desired achromaticity of device (for example to compensate for different grating efficiencies or to compensate for spectral distribution of ambient illumination or to compensate for different efficiencies after embossing). These areas could be written in lines or areas with the relative area of each form of structure adjusted to provide an achromatic (or whatever colour hue) replay is required. An advantageous property of this method is the ability to adjust precisely the different areas of the different diffractive elements to adjust the colour hue of the device, for example to accentuate blue end of the diffracted spectrum to create an unusually white appearance in the display. Another aspect of this adjustment would be to allow the creation of gentle colour hues differing in different areas of the device which could usefully form a graphical image for promotion, security etc as a secondary image on the display of a much lower impact than the main dominant addressable foreground image.

Always the areas distribution and shape of the areas would be adjusted both to ensure no structure was visible to the unaided by keeping at least one dimension of the structure at a size less than the normal eye resolution of around 250 micron, typically less than 100 micron here, preferably less than 75 micron and to ensure invisibility to view less than preferably 50 micron. A useful form of area shape would be curved lines or interlocking polygon areas, in one embodiment preferably random in size and shape locally to break up any observable structure but designed to close pack with minimum gaps. A useful form of structure of elements is an apparently randomised structure of polygons at a scale size just beneath the human eye resolution which would produce an appearance similar to the random appearance of laser speckle but smaller in scale and so less visible. A very useful design of localised areas in terms of minimising dislocations between areas and in terms of keeping would be to used curved wavy line structures, designed to interlock together, each with plain linear blazed grating written along it with the grating lines parallel to the sides of the overall line, using the changes in angle of the wavy line to change the grating orientation (rotation) with the line shape, degree of curve angle and proportion of curve angle adjusted to provide the correct view angle on the final device This thus enables a linear grating to be used with maximum diffraction efficiency and simplest structure yet still having an ability to optimise and adjust the replay angle and hence viewing cone replayed by the final achromatic device.

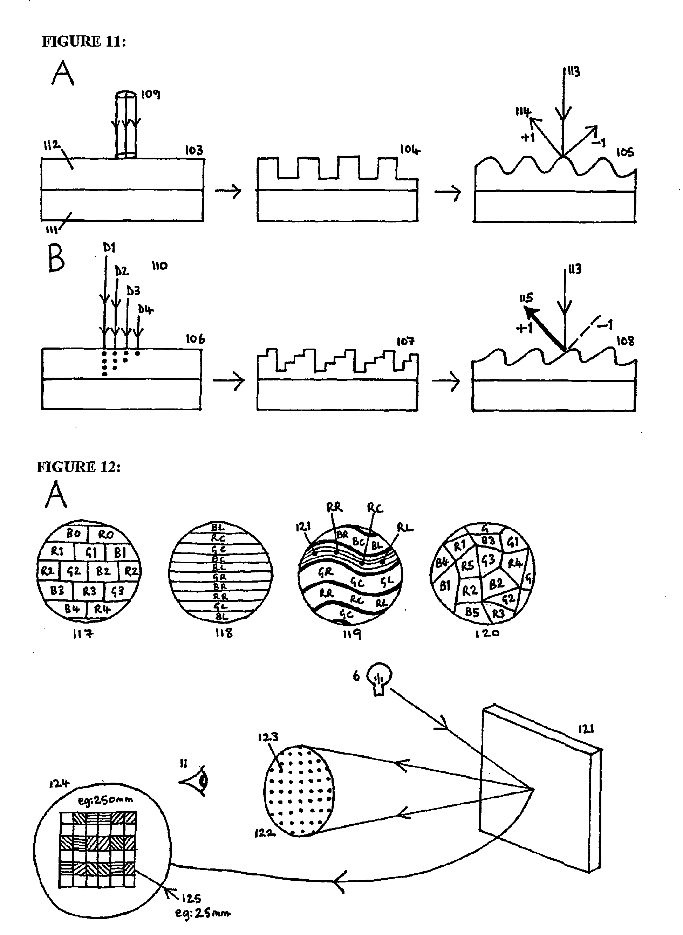

Figure 11 shows the process of electron beam recording of these structures. Figure 2A shows the recording of a binary square wave structure by exposing a suitable resist recording medium (112), on a substrate (103) to a relatively large electron beam (109) which is traversed across the substrate, which after development give a near square well structure and after embossing becomes rounded to become nearer a sinusoid providing a simple surface relief structure diffracting +1 and -1 orders. Figure 2B shows the formation of a blazed asymmetric structure by exposing a recording medium (106) to a much smaller diameter electron beam (110) with several different dosages D1, D2, D3, D4 to form after development a step-wise asymmetric structure (107). After embossing this structure becomes more rounded but still retains an asymmetric profile diffracting more light into one order than the other depending on the profile in order to enhance the desired diffracted replay order (115).

Another way to record such structures is to produce square well gratings with an electron beam process, for example, and then subsequently create asymetric structures, e.g. blazed structures, by using a reactive ion etching or ion etching process in a directional ion streamfrom one side of the normal to erode away part of the structure to make the overall groove shape asymetric. This technoque could be apploied bith to square pattern gratings produced by electron beam and also synthetically calculated rainbow type structures which could also be made asymetric by this technique. This process could also be used with holographically produced gratings to obtain an asymetric etch effect but is likely to be less effective due to microscopic surface roughening due to recorded speckle.

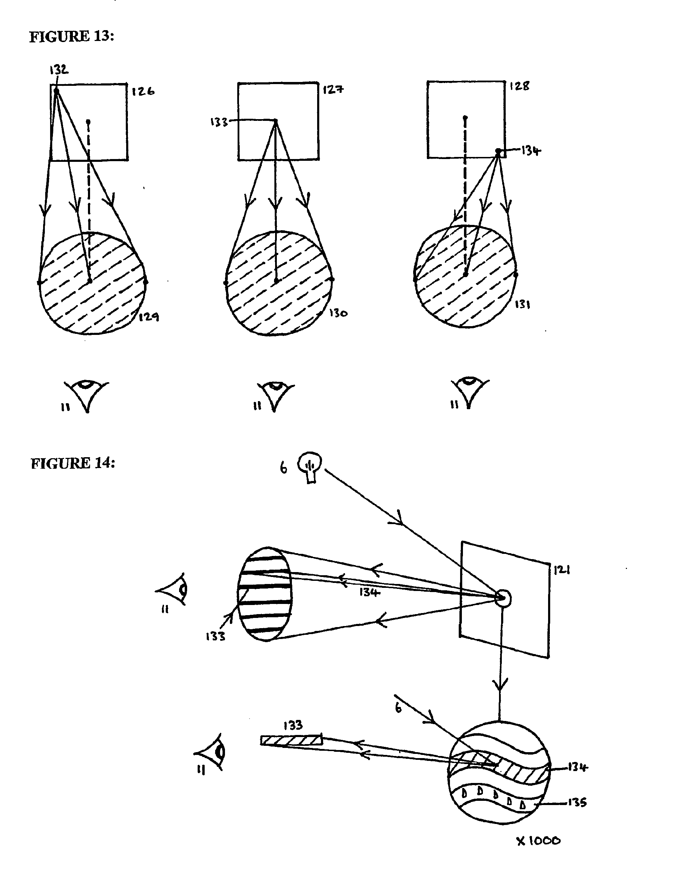

A preferential arrangement for organising and manufacturing these structures at a microscopic level is shown in Figure 12 which describes a preferred organisation for the achromatic diffractive diffusers described here. In a preferred, though not exclusive, method of organisation the device area could be split into master-pixels of typical size 250 micron (i.e. beneath eye resolution, though the range 100 to 300 microns would also be usable). Each master pixel could be further subdivided into sub-pixels of typical scale size 25 micron (10 to 100 micron typical) into which different diffraction grating pitch structures and orientation of structures could be written. In one arrangement each line of sub pixels could contain the same pitch grating to control the diffraction angle in the vertical direction, with the orientation of the grating being altered from pixel to pixel (and where necessary the pitch and area balance) to provide horizontal diffusion. In this way, as shown in Figure 12B, the diffuser master pixel would replay up to of the order of 100 separate replay points (123) into the desired viewing zone (The spot output would occur under monochromatic light and under white (ambient and extended) light sources the diffracted output beams would merger together by diffraction and angular dispersion). The structure of a typical small area of this form is shown in Figure 12B showing a possible arrangement. Typically the areas allocated to each grating structure would be adjusted to suit overall colour hue of final device (usually achromatic after embossing and adjusted for typical final light source spectrum if required). The grating areas could also be advantageously blazed for higher desired diffraction efficiency. Figure 12A shows several different organisations of this structure, for example (117) rectangular areas, (118) line areas showing areas designed for various colours red, green, blue (R,G,B) to obtain colour mix and various orientations to give horizontal view angle (left (L), centre (C), right (R)), and polygon areas (120) designed to be close packed with less obvious structure and arrays of curved lines (119) with plane gratings written along line and with the view angle defined by radius and extent of curvature e.g. R,L.C as annotated. A special property of forming an achromatic diffractive diffuser is that the diffractive cone angle must be changed at all positions on the device to ensure that all parts of the reflector diffract light into the same viewing zone - so for example Figure 13 shows the different output replays for the two extreme corners of the device and the centre point showing the different properties required of each to obtain the optimal view zone. Hence these achromatic diffractive diffusers are characterised by having a continuously varying diffractive replay cone at all points on the display.

**2.2 :** In another form of this device the electron beam structure would be used to produce a structure that produced a similar replay to a rainbow hologram slit (though ideally without the associated speckle noise), and ideally with an asymmetric blazed profile, to produce an achromatic device as in disclosures 1 and 2 by utilising several such areas located together in a periodic pattern, possibly polygons designed in a close packed array or possibly line or curved line structure. An advantage of using an electron beam generated structure rather than a holographically generated structure ids the greater efficiency possible due to the more accurate positioning of the structures, the more accurate formation of optimised slope angle blazed structures and the lack of laser speckle structure which tends to break up the microstructure and reduced blazed effects in holographically generated structures. In one option some of the curves on the linear structure could be used to accentuate the replay angle of the rainbow holographic structure (probably a structure actually replaying 3 or 4 diffraction spots arranged in a line) by using a periodically curved line structure, allowing the simulated rainbow hologram structure to be simpler in structure on a microscopic scale and therefore more closer in profile to a simple blazed diffractive structure and also enabling the device to be more accurately written and profiled with available electron beam resolutions, and thus to obtain a higher diffraction efficiency than with a classically generated structure.

Figure 14 shows an image display device (121) with a reflector according to this part of the invention showing the several overlapping relay directions (133) and with an enlargement showing one possible organisation of an area (134). This also shows how areas with alternative characteristics, such as diffusion, (structure 'D' - 135) may be incorporated into the structure. In an alternative device, an entire achromatic diffractive device can consist of a form of surface relief device comprising a synthetic computer generated diffractive device. The device can be formed by direct writing of the structure by means of electron beam lithography.

**2.3 :** In another aspect it is useful to incorporate some general diffusion and scatter into such devices in order to improve the general diffusing properties of such devices to improve the 'off diffractive replay' visibility. Hence another form of this device attention is paid to the balance between diffractive replay efficiency from a surface relief achromatic metallised element, which tends to provide enhanced reflectivity within the cone angle of holographic replay, but can produce very little brightness (less than a conventional reflector) when viewed outside this viewing zone because such devices tend to exhibit less general scatter than standard diffusers. A method of overcoming this disadvantage of previous devices is to use a diffractive microstructure containing both controlled diffractive elements to produce an achromatic diffraction and also controlled diffusing elements, the two functions being adjusted during manufacture to produce the correct balance between diffractive replay and general diffusion and scatter to provide a general level of visibility when the viewer's eye is outside the diffractive replay cone. This would involve extending the direct write method of generating achromatic diffractive structures by creating a structure with some controlled degree of diffusion by use of a one or several of the following techniques described immediately below.

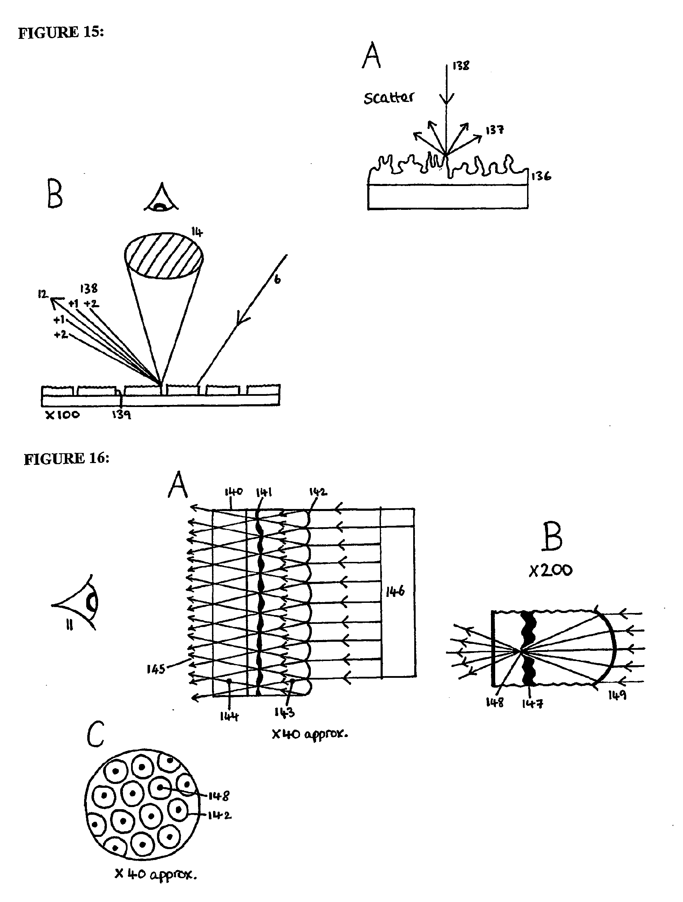

Figure 15 shows a microscopic enlargement of a typical form of scattering structure and Figure 6A shows the typical performance of such a device when viewed showing an extended view angle off the diffracted view zone created by the scatter areas, and Figure 6B shows how such a scattering structure can be incorporated into the pixel or discretely directly written area structure anticipated here by replacing a proportion of the discrete areas.

In an element consisting of curved lines or interlocking polygons or other shaped areas (e.g. lines, curves, rectangles, all preferably with a close packed geometry) of plane, preferably blazed, diffraction gratings a useful technique is to replace a proportion of these elements with elements containing randomised structures (a microscopic surface roughening) designed to provide some near on axis general diffusion of light. These scattering structures would be non-diffractive, non periodic structures designed to scatter incoming light into a diffusion cone determined by the sharpness, average pitch, depth and profile of the structure. So in a preferred device a diffractive achromatic diffusing element for use as a diffractive achromatic enhancement film consists of regions of diffracting elements (preferably below 100 micron, ideally below 75 micron) of preferably blazed gratings and a proportion of the elements are areas of non periodic scattering structures, the whole device being a hybrid between diffractive and scattering structures designed to produce a controlled amount of diffractive achromatic replay when viewed within the viewing zone and a controlled degree of 'off view zone' general diffusion to provide a background level of visibility for the display. In a preferred embodiment the structure would be generated by direct write processes such as lithography or electron beam lithography, see Figure 6C (Diffusing areas (65) 'D') for a possible arrangement.

In other methods this principle can also be used with different embodiments - for example in the examples given above of achromatic diffractive diffusers created using curved lines of (preferably) blazed high efficiency diffraction gratings, a small proportion of the line zones could be replaced with non periodic scattering structures to produce a general degree of scatter to provide off view zone visibility for the display device as well as the achromatic diffractive effect. This replacement of a proportion of the line structure would also apply to line or area structures consisting of lithographically generated structures which have a diffractive replay similar in characteristic to a rainbow hologram element.

Figure 6B and Figure 14 (inset) show possible arrangements for this.

Another method of incorporating diffusion into such devices without reducing the area of device available for diffractive structure is to instead utilise the inter-line or inter pixel discontinuities in these structures which always exist in such directly written structures anyway, in this case the inter-pixel discontinuities would be structured with non periodic structures in terms of depth, profile and sharpness to provide the required degree of scatter - for this these areas can be much smaller in dimension than diffractive structures.

Another method of writing controlled near axis diffusion into such devices is to utilise the often regular arrangement of the elements of the achromatic diffractive structure to produce much coarser diffraction elements (period 5, preferably 10, to 25 micron), superimposed on the other achromatic diffraction structures, that will themselves diffract light into several diffraction orders at small angles from the specularly reflected light to produce an achromatic diffraction effect due to the overlap of many diffraction orders at small angles to increase the viewability of the device. This would be an achromatic diffractive device of improved off viewing zone visibility by utilising an additional superimposed coarse diffraction grating.

Figure 15B shows an arrangement for the use regular inter-area structures to give coarse diffraction grating effects showing coarse grating replay orders near the specularly reflected beam (138, marked as +-1, +-2 orders).

**2.4 :** An additional option possible with all of these directly written structure is to combine with the structure some form of visual diffractive element to provide a visual diffractive message. For example within any of these achromatic diffractive devices or hybrid achromatic diffractive / diffusing devices a proportional of the small areas (lines, interlocking polygons, curved lines, etc) could be replaced with diffraction elements designed to replay in a different direction to the achromatic diffractive structure to produce a message e.g. to prove the authenticity of the device (for product ant-counterfeiting purposes) with a graphical message or for promotional Messaging use. A typical example would be to allocate a small proportion of the area elements to this visual message which may only actually be placed in specific areas of the screen display to avoid important information areas whilst the remainder of the elements allocated to the visual message remain unused to ensure no ghost image of the visual image appears to degrade the uniformity of the main area. A typical different direction of replay could be a visual device reconstructing an image at a slightly different replay angle to the vertical so appearing in the same orientation as the achromatic replay when the viewer tilts the device slightly vertically (suitable for an visual image localised to a small non critical part of the display) or with a visual image replaying when the display is rotated by 90 degrees to avoid the replay of the visual diffractive images interfering with the replay of the visual diffractive display.

Alternatively a slight ghost image may be entirely acceptable in certain areas of the display to allow maximum brightness in other areas and an advantage of this technique is that the achromatic brightness in the areas of the visual message will be reduced only by the absence of area not by competition between the two structures. In the position where the pixel points of the visual image are very small and beneath eye resolution the ghost image will be nearly invisible being a set of tiny dark dots beneath the eye resolution set upon an white background, whilst the visual image will be much more discernable being light out of a dark background.

Figure 4 shows the arrangement by which an achromatic diffractive diffuser can also replay a visual diffractive image visible at a different angle on vertical tilting or rotation (Figure 4B), with Figures 4C, 4D, 4E showing how this could be organised into a diffractive device without degrading uniformity of replay by replacing part of the individual diffractive structure with the imaging structure for the visual replay (50, A) and with an absence of structure in other areas to keep the brightness uniform.

**3 :** This part of the invention relates to a method of improving the optical efficiency of reflective diffusion and back light transmission by providing a method of enabling reflective diffusers to be made more reflective or to retain their existing reflectivity whilst additionally increasing their light through put and hence increasing the back-light efficiency and reducing energy consumption by the use of an improved optical device.

**3.1** :This new structure can be used with a standard reflective diffusing element for enhancing rear back lighting brightness but is preferably used with the various achromatic or holographic structures mentioned here. The invention involves the addition to the rear of these structures of a set of micro-lenses, typically though not necessarily organised in an array, these are preferably matched in perfect register to an array of small apertures (micro-holes) in the reflector layer, and the invention provides for a novel method of producing such a device. A possible micro-lens element size would be between 25 micron diameter 500 micron diameter though a typical diameter for this application would be between 75 micron and 300 micron, the essential point being that these devices operate on the principle of refraction.

This new device is therefore a light diffusing holographic reflector, applicable for use with both current holographic and non holographic reflector devices, but preferably for use with diffractive reflector devices and preferably devices of the subject of this invention. The new device is a light diffusing diffractive transflector placed in close proximity to the rear of a image providing display element (e.g. LCD), the transflector consisting of a diffractive achromatic reflector consisting of a surface relief structure capable of receiving ambient light incident on image and redirecting light back through the image towards an observer with a brightness greater than that obtainable from a purely diffusing scatterer, and further including a set of transmissive micro-holes formed within the reflector of the diffractive layer, and further comprising an array of micro-lenses placed behind the diffractive reflector and position so that the micro-holes in the reflector layer lay (registered) near the focal points of the micro-lenses so as to concentrate light incident on the rear of the display through the micro-hole array so as to improve the effective transmission of the transflector array. This arrangement thus increases the back light luminance, reduces the back light power or enable a higher proportion of the front reflector to remain more completely reflective to increase ambient light brightness and the net result will be a trade off between all these. The key structure is a composite layer supplied as one light enhancing film consisting of on one side the metallised achromatic diffractive reflector, on the other side an array of micro-lens of focal lengths approximately matched to the substrate thickness. The micro-lens array can be regular in form and pitch or can in a potentially preferential method be irregular in pitch but on average the same packing density to avoid moire effects and other such artefacts with the regularly spaced structures of display device. The key aspect is that the micro-hole arrays are precisely positioned at the focal points of the micro-lenses to ensure maximum possible light concentration and through-put. The micro-holes are designed to be of a non-visible size, being very small, beneath minimum eye resolution (e.g. less than 200 micron and preferable range 15 to 100 micron) and in addition to being non viewable can be of a size that spreads light passing through by pinhole diffraction effects. The key aspect of exact registration between micro-holes and focal points of micro-lenses is achieved by manufacturing the device as a single sandwich with a complete continuous layer of metallisation (e.g. aluminium) and then using illuminating the lens array with laser light such that the laser light forms a focus at the metal surface to thus vaporise the metal at the focal point of the laser beam completely in register to the lens. Note that the micro-lenses could also be formed as in line diffractive optical elements, although this would lead to more design issues due to the dispersive performance.

Figure 16 A, B, C shows the structure and operation of this new device. Figure 16A shows an image providing display (140), backed by an achromatic diffractive diffuser (141) with a series of small apertures ('micro-holes') in its reflective surface in perfect to the focal points of a micro-lens array (142) which concentrates light from a back-light (146) through the micro-hole array thus retaining an excellent reflective performance from the device as most of the area will be fully reflective except for a small area lost to micro-holes, whilst the transmissive performance will be vastly enhanced because of the significant rise in real transmissivity by concentrating light through the micro-holes with the lens array. Figure 16B shows an enlargement of a micro-lens 149 concentrating light through a micro-hole 148 in register to the lens, the micro-hole being in an reflector layer 147 on a diffractive reflector. Figure 16C shows a set of micro-holes 148 in register to the micro-lenses 142.

**3.2 :** Several laser sources could be used for manufacturing this device as known in the field for cutting and marking (e.g. carbon dioxide lasers), although an improvement and a preferred embodiment of this invention is be to use a laser wavelength not absorbed by the plastic substrate (a disadvantage of using a Carbon Dioxide laser, at infra red wavelength 10.6 micron,) but one to which the substrate is transparent but the metal reflector absorbs (e.g., but not limited to, Neodymium YAG laser operating at 1.06 micron) so that the metal film is ablated by the focussed laser light rather than the plastic base material. This ensures perfect subsequent relative registration of micro-holes and lenses to ensure the micro-holes are accurately registered at the focal points of the lenses and hence a significantly improved light throughput and performance is obtained.

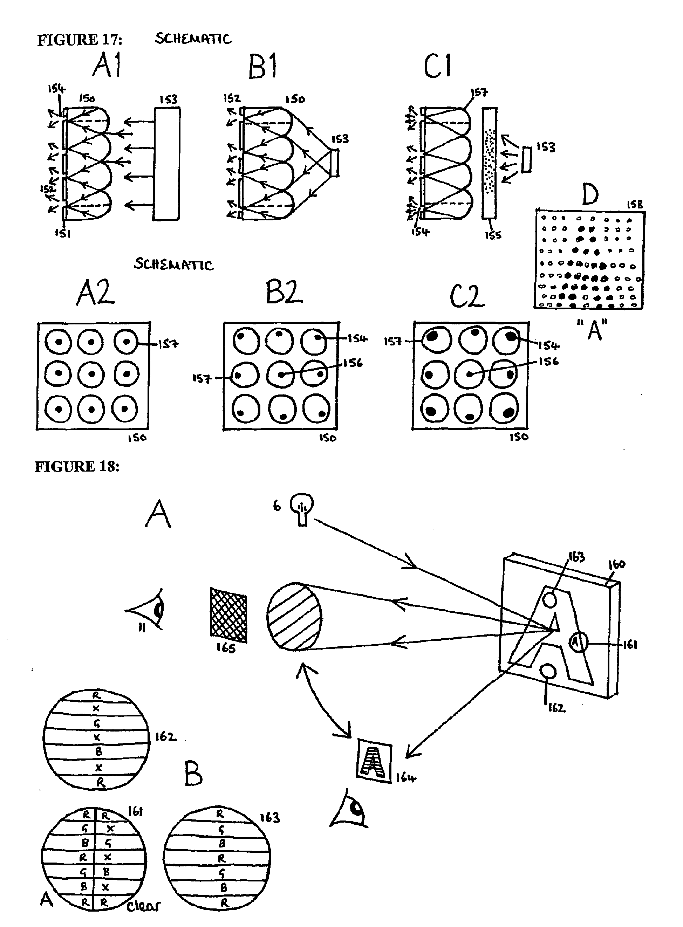

Figure 17 A1 and A2 shows this manufacturing method for exposing a lens array to a laser light source 153 and ablating material 152 off the reflector layer 151 to from micro-holes in the reflector layer and Figure 17 A2 show a selection of lens positions across the device showing in this case registration.

The microlens structures could also be formed as micro optic fresnel lens structures where the surface curvature of the lens is mapped onto small areas of curvature on the surface. Alternatively, the microlens structures could comprise fourier zone plates which operate by a process of diffraction to form an in-line focussing element.

**3.3:** A very useful aspect of this method is that this direct ablation method of creating micro-holes at the focal points of micro-lenses is very flexible can be done by orientating the substrate and laser beam in various ways to obtain various different effects. For example the lenses array could be exposed to a diverging, converging collimated or any other distribution of laser light, the lenses array could be scanned by a beam or slightly expanded beam of laser light, and particularly the collimation and focal properties of the incident beam of laser light could be adjusted to be similar to the back light source output beam profile, divergence and degree of collimation or any other form of beam profile as per the real device to be used, (for example approaching from a side angle, or originating from a line or point source to model the light source to be used). In this way micro-holes can be constructed in exact register to the focal points of the lenses for any arbitrary lighting arrangement of the array. For example if a transflector was to be illuminated in the end use by a source in a particular position and of a particular light output shape with respect to the transflector, the input beam could be adjusted to reflect the shape and divergence properties of this beam, thus ensuring true registration of the micro-holes with the focal points of the micro-lenses under this form of illumination to improve light throughput. The energy distribution of the illuminating laser beam could also be adjusted to alter the size of micro-holes created in different areas of the transflector to compensate for non-uniformities or edge effects in the intensity of the back light source to be used. For example if the luminance of a back light reduced at the edge of a display this could be compensated for by creating relatively larger micro-holes at the edge of the display to increase the luminance there. An example of such a system to homogenise an extended back-light is shown in Figure 17 B1 and B2 and C1 and C2. One method of achieving this would be to make up a mask for use during exposure of micro-lens array for laser light to compensate beam intensity made by either pre-calculation or direct exposure of photosensitive medium to the irradiance pattern of the back light to form the mask directly.

Figure 17A, 17B and 17C show various direct ablation manufacturing geometries - B 1 show a method of compensating for a diverging light source by exposing the lens array to a diverging laser beam and Figure 17 B2 shows the effect of this on relative positions of apertures and micro-lens across the extremes (157,154) of the device showing an offset in position to accommodate for the light source. Figure 17 C1 and C2 shows how an amplitude mask may be interposed between laser source lens array and the resulting variation in micro-hole size across the extremes of the display (154) where the edge micro-holes are enlarged to accommodate for reduced irradiance in these areas.

**3.4 :** This masking technique used to vary the relative size of certain micro-holes in relation to others can also be used to provide subtle graphics and additional messages on all or part of the display, where a subtle message in the back-lighting will under-lay the main variable message in the display.

Figure 17 C1 shows how a mask (155) may be used to adjust the relative sizes of micro-holes produced and Figure 17 C2 shows the result. Figure 17 D shows an additional transmissive image produced in this way.

**3.5 :** There are several methods by which this structure could be manufactured. The diffractive structures can be manufactured by hot embossing under heat and pressure or by ultra violet light cured embossing by curing a resin on the surface profile. Micro-lens arrays can be manufactured using similar processes but are more amenable to UV cure processes being larger structures. Several production routes are anticipate for this structure, either embossing both diffractive and micro-lenses structures onto separate carriers, metallising the diffractive structure as required and then laminating the two structures together prior to laser ablation. A more elegant route is to form the diffractive structure and micro-lenses on either side of the same substrate potentially in two passes through the same UV embossing machine, then metallise the diffractive structure, then laser processing to form the micro-holes before adhesive coating, applying to backing layer and finishing as appropriate.

**4 :** This part of the invention provides a pattern effect on the metal reflection layer visible in reflection whilst maintaining a uniform diffractive brightness behind the display elements. A new holographic transflector device is described comprising a graphic incorporated into the reflective layer visible in direct specular reflection with a uniform reflective brightness with gain from the achromatic diffractive device obtained by compensating this device for variations in absorption or reflectivity. Also a method by which a two colour metallic device can be created for reflective graphics without degrading the information display performance, also a methods of creating printed graphics and compensating for the effects of these.

**4.1 :** This development consists of new structures and methods of formation that add new effects and consists of a reflective holographic light control film for image forming displays consisting of a two or more colour reflector displaying a graphic or logo or similar, plus a holographic or diffractive substantially achromatic replay surface relief structure where the diffracted replay for viewing the displayed information is made uniformly achromatic through out its area (i.e. white or some desired colour hue) by compensating for the colour hue of the graphic area. This is done by adjusting the relative area composition of the different diffractive elements making up the achromatic diffractive reflector such that the colour hue of the reflector compensates for the hue of the graphical elements in the colour hued areas and compensates for the overall slightly reduced brightness in the colour hued areas by a balancing but still achromatic general brightness reduction in other areas. This technique is particularly suitable for use with achromatic diffractive devices generated by electron beam lithography as far greater detail control of area composition is possible. Because this technique results in a reduction in diffraction efficiency for the compensation it is best used for subtle colour hue graphical effects used as a secondary image to the main bright addressable image. Because the transmissive density of any colour layer such as an ink is far less than the colour density in double-pass reflection then for subtle colour graphic effects the effect on the transmitted light colour will be negligible thus allowing an achromatic display in transmission back-light arrangement also generally without the need for any other special alterations to accommodate this.

**4.2 :** For deeper colour hues the transmission achromaticity efficiency can be retained after colouring, for example (though not limiting) by using laser ablation techniques to remove both the metal reflector layer and the colour print layer in specific areas to form localised micro-holes, this technique requiring that the colour hue is effectively combined integral to the surface relief and reflector layer possibly by printing directly with a conventional visible or non visible ink (e.g. fluorescent) onto the reflector surface (not necessarily with a combined micro-lens array). Of course a preferred method as per this invention would be to use a micro-lens array integrated with the diffractive and graphical element and to use the laser ablation technique detailed earlier to form a micro-hole in both layers simultaneously.

**4.3:** The colour hue effect can also advantageously be produced using layer of two different metals of different spectral reflection distributions to provide a subtle colour and reflection pattern with an attractive totally metallic lustre distinct from print. These two metal layer could be combined in distinct areas or could be used to produce a subtle colour and reflection pattern by half toning these metals. Two useful and suitable metals for this effect would be to use the silver effect of aluminium and the bronzed colour of copper, the aluminium being laid down first and then areas removed by either laser demetallisation or demetallisation by chemical etching to leave clear areas followed by a second metallisation stage to put behind this layer a layer of copper using typically a second evaporative vacuum metallisation process.

This combination produces an attractive colour effect of two tone metallic lustre which is useful in displays applications and also usefully in security diffractive device applications plus a method of compensating for these changes in reflectivity by locally altering the efficiency of the holographic reflector to enhance its reflectivity in areas of lower background reflectivity to obtain a uniform overall brightness and diffraction efficiency over the diffracted image, which is useful for security application as and adds to the overall aesthetics and security of the optical security device and is particularly useful in the case of achromatic diffractive device for enhancing image display devices.

The device can be made to have an achromatic (white) diffractive replay for viewing the main variable image display against by adjusting the relative areas of component diffractive structures to compensate for the colour hue, reduced reflectivity and altered spectral reflectivity of the colour hued areas by adjusting the colour balance of the diffractive structure in the coloured areas and compensating for the reduced achromatic diffraction efficiency in the coloured areas by a compensating small reduction in the aluminised (white) areas. This is the same principle as the methods outlined above and is particularly suitable for use with diffractive structures written by electron beam lithography where this form of origination allows close control over efficiencies of various areas.

Figure 18 A shows the visual characteristics of a device formed by this method showing a uniform rear achromatic diffractive reflection (165) against which the information display is viewed, the device also displaying a visual graphical pattern on the screen when this is viewed in specular reflection (164), normally seen as a subtle colour variation. Figure 18 B shows magnified small sections of the device corresponding to the separate types of areas 161,162, 163 showing the variation in pixel or diffractive density from a fully reflective areas (e.g. AL) where certain of the diffractive structure is left unused ('X') to balance the efficiencies, a coloured area of reduced reflectivity such as 163 where all diffractive areas are used to balance efficiency and where necessary relative contributions of different diffractive components are adjusted to maintain achromaticity and an edge area 161 where the two types of structure meet.

The transmissive properties for back-light illumination can also be obtained as outlined above, by using laser ablation to create micro-holes in the two contiguous two layers simultaneously, with or without the use of micro-lens concentrators as detailed in a section above. The demetallisation can also be achieved by aluminising the device, selectively chemically demetallising by either a direct etch process or a mask printing stage followed by an etching process, followed by printing of an additional intermediate mask to define the areas to remain clear in the final device, followed metallisation by vacuum evaporation with a another differently coloured metal such as copper (but a range of such metals is envisaged to suit the application) and finally followed by a stage of attack and removal of the intermediate mask and the areas of copper deposited on it to leave a bimetallic demetallised article. The intermediate mask removal can be achieved by using an intermediate mask of a wax material that is soften and melts at a low temperature and can be removed by passing the material through a hot aqueous bath to melt and wash away the mask material, similarly a water soluble mask that also softens under temperature could be used and stripped of in the same way.

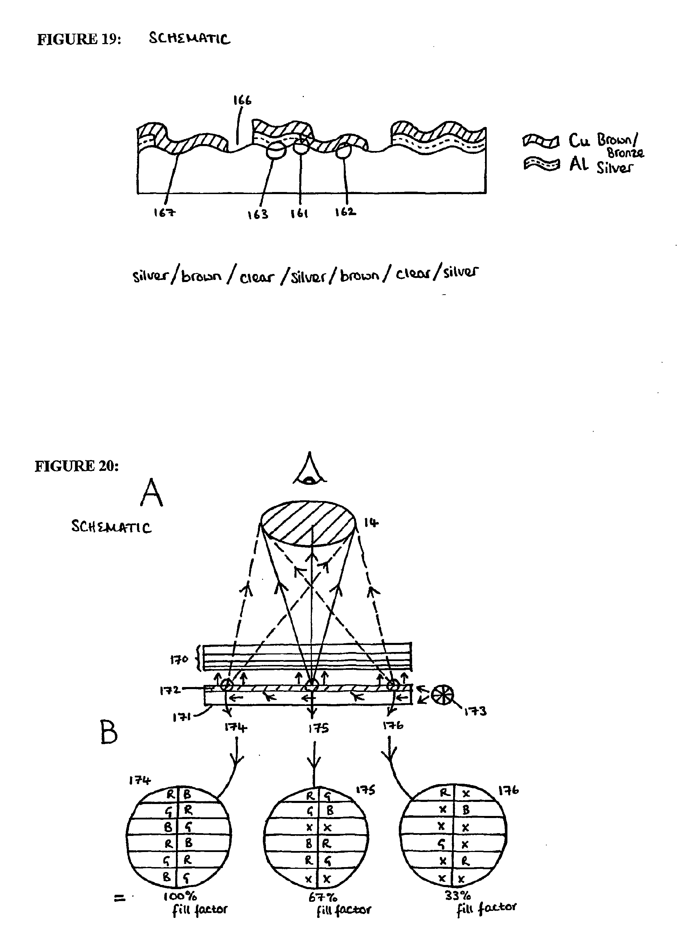

Figure 19 shows a magnified cross section of a bimetallic layer showing surface relief (167), silver aluminium reflector (163), different coloured or reflectance reflector e.g. Copper, 162 and fully demetallised areas 166.

**5 :** This part of the invention related to improved diffractive back-light elements for image display devices using the improved diffractive achromatic elements of the form as detailed in section 1 and 2 together with some additional aspects particular for this application. A new class of back-lighting elements consisting of back-light formed of a holographic or diffractive light output coupler from a side lit element, in one form using the achromatic diffractive diffusing device to provide an achromatic back-light effect and altering this device using one of several origination or demetallisation methods to homogenise the display. Also a similar hybrid device comprising a compound achromatic diffractive device to both enhance the display with gain in reflected ambient light and to couple out and re-direct side or back-lit light for reduced light illumination of the display.

**5.1 :** This development provides firstly an improved but simplified back-light element consisting of a plastic sheet side-lit laminated on one face with a reflective holographic element used to couple light out of the plastic sheet which acts as a light guide, and secondly also to provide the above and an improved conventional injection moulded back-light light guide where the diffractive element is uncoated and the plastic acts as a light guide and the diffractive element acts as an output coupler and diffusing device combined and where preferentially, but not exclusively, the diffractive structure is formed from a set of small areas of diffraction gratings, possibly lithographically produced, and arranged to provide the correct output coupling and diffusion. All of the holographic and direct write lithographic origination techniques detailed above in parts one and two and the different arrangements for recording these images with very high efficiency, for making them achromatic, for recording additional visual diffractive image information into them and for incorporating with them diffusing elements.

In the output coupler arrangement the holographic or diffractive element is designed to couple light out in a fixed direction or angular view zone (diffused) for an observer to increase light efficiency and apparent brightness by concentrating the output light into a narrow defined viewing window and preferably has an achromatic white performance achieve d as before by using separate small areas (small meaning beneath the normal resolution of the human eye and hence non visible to an observer allowing a featureless white background - below 200 micron and preferably below 100 micron) of either diffraction gratings (ideally blazed) or areas of holographically produced or electron beam synthetically generated surface rainbow hologram elements, the diffractive replay of which when superposed provides a white effect for an observer.

**5.2 :** A useful embodiment of this is when the side-light source is either a white light source such as an incandescent lamp or in another case where the side-light source consists of several light emitting diodes, for example coloured red, green and blue where very usefully the diffraction efficiency of the diffractive structure particularly if written as a set of diffraction grating areas can be adjusted to provide a uniform achromatic output to compensate of variations of position, spectral irradiance by varying area fill factors and orientations of the particular diffractive areas to accommodate for this - a particular strength of this invention is to allow the creation of a uniform achromatic display by compensating in the design and organisation of the diffractive elements of device for variations in side light illumination and geometry enable greater uniformity, particularly in lighting colour displays where uniform achromatic lighting is important to obtain a uniform colour response to be observed on the image providing display.

**5.3 :** Another very useful aspect of this invention is to provide for a method of controlling and making uniform the overall viewing intensity by controlling the efficiency of the out put coupling efficiency of the holographic or diffractive element principally by controlling local efficiency by either changes in diffractive groove depth, changing local fill factor in an element composed of pixels or lines or curved lines or polygons of diffractive or holographic structure. A preferred achromatic diffractive structure The diffractive structures used in these devices will be similar to the achromatic diffractive structures used in parts 1 and 2 and all of the forms of device and structure anticipated and detailed therein are included in this part of the invention, although particularly advantageous here are diffractive structures written by electron beam lithography where the positioning of the structures, the fill factor and the orientation can be continuously adjusted between small areas. It will be appreciated that for these devices the preferred form of device is an achromatic diffractive structure specialised for this application, but that this part of the invention of a device for simultaneously coupling out and diffusing from light-guides can also be used in a simpler form for monochromatic side-illumination sources.

Figure 20 shows a device incorporating elements of sections 5.1, 5.2 and 5.3. An image forming display device (170) is backlit by a combination of light guide (171), holographic / diffractive output coupling element (172) and light source (173) - in this case the light source is side mounted in a geometry where the holographic element is advantageous, but the element could also be side or back lit. The diffractive element couples light out with increasing efficiency as the distance from the light source increases to compensate for the drop in intensity and so homogenise the display - elements 176, 175 and 174 show three zones with fill factor of diffractive element 33%, 67% and 100% as an example to show how the display is homogenised in this way.

**5.4 :** Another useful element of this invention is the combination of a diffractive reflector and side light output coupler to provide an improved device. In this device there provide firstly an improved but simplified back-light element consisting of a plastic sheet side-lit laminated on one face with a reflective holographic element used to couple light out of the plastic sheet which acts as a light guide for visualisation of the display under low light level conditions, and secondly also to provide within the same element a reflective achromatic diffractive diffuser to enhance the visibility of the display by diffracting ambient light into a viewing zone using the overlapping replay of many small several diffractive areas (each area in size beneath the normal resolution of the human eye). The diffractive and holographic techniques used for the reflective achromatic diffractive diffuser are as detailed in parts 1 and 2 which are included by reference. With this device in separate small distinct areas would be recorded the diffractive structures of somewhat different properties required to couple light out of the array. Within this hybrid device the two overall optical elements, the output coupler consisting of many different diffractive and diffusing areas, and the reflective diffractive achromatic diffractive reflector as above used for display enhancement in ambient lighting, these two structures will be interposed together each occupying independent non overlapping microscopic surface areas of the device.

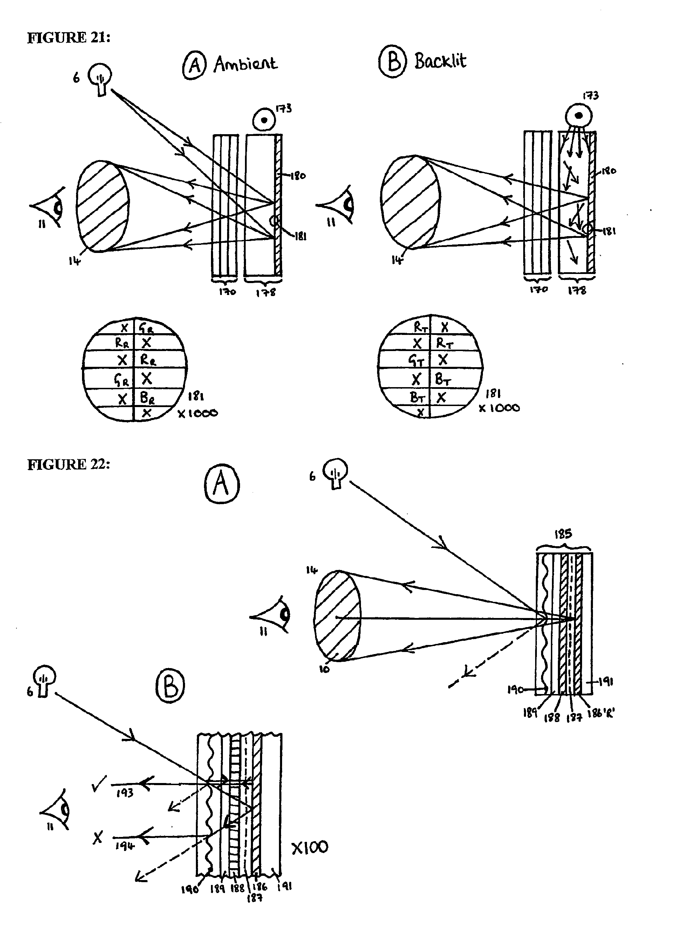

Figure 21 show a dual action device for illuminating a display 170, with Figure 21 A showing reflective behaviour where the device acts as a diffractive enhancer under incident ambient light, the enlargement 181 showing in this case the active areas of the microstructure, sub-script 'R', whilst Figure 21B shows the same device 181 when side-lit from a source 173 and when in this case the device acts as an output coupler from the wave-guide structure 178 (typically simple and plastic), to back illuminate the display by directing light into a diffused viewing zone 14, showing in this case an example of the active areas of the diffractive device, sub-script 'T'. Figure 21 also shows how the achromatic diffractive output couple can be made up of many small sub-eye resolution areas of different grating characteristics.

**5.5 :** Another method of obtaining a uniform output from the coupling out elements above would be to selectively demetallising the element to make the output viewed uniform, used in combination with the forms of achromatic diffractive structures detailed in section 1 and 2 and section 5 (5.1 particularly) so varying the metallic coverage across the area of the diffractive device to enhance the coverage in lower illuminance areas.

**6 :** This part of the invention details usage for these diffractive devices with reflective image display devices to enhance their visibility in ambient light. This relates to a way to create a directional diffuser enhancement overlay by using a surface relief transmissive optical element overlay. A new surface relief diffractive enhancement overlay film is described, using the achromatic diffractive devices of section 1 and 2, together with various other techniques such as variable fill areas of a size below the eye resolution and the incorporation of optical power into the devices to produce improved diffractive overlay reflection films.

**6.1 :** The inventive step relates to ways in which the new achromatic diffractive structures formed as surface relief structures, can be used as transparent overlay films for enhancing reflective image display devices such as reflective liquid crystal displays, a typical form of which would be colour TFT displays, for example, where the reflective layer is the rear silicon surface the device itself is formed on.

This relates to a way to create a directional diffuser enhancement overlay by using a surface relief transmissive optical element overlay. The achromatic diffractive element could be made transmissive by replacing the metal reflector layer with one or more layers of high refractive index material to produce a transmissive diffractive element. Suitable materials could be high refractive index materials such as zinc sulphide, titanium dioxide coated normally by vacuum deposition, and optionally of a controlled thickness to optimise the effect or one of several very high refractive index glass materials deposited by proprietary coating processes. These films would be laminated to the display. In another embodiment the diffractive surface relief structure could be left uncoated and uppermost on the device obtaining the refractive index differential at the surface from the air- plastic interface. This offers a lower cost, higher diffraction efficiency device but also leaves a diffractive surface exposed to dirt and abrasion.

**6.2 :** In one embodiment this device would be used as an overlay adhered usually to the outside of the glass of the LCD assembly. In one embodiment this device could use the achromatic diffractive diffusers made holographically detailed in section 1, where the diffraction efficiency of the device is enhanced by creating an achromatic diffractive diffuser, in this case operating in a transmission mode, out of discrete areas to allow each diffractive are to obtain maximum efficiency. In another embodiment the achromatic diffractive diffuser could be originated using the direct write electron beam lithography techniques detailed in section 2 to obtain very high efficiency transmissive diffusers to provide a diffusing diffractive element to redirect incident light normal into the display at a normal angle, plus an achromatic performance to ensure good colour rendition from colour displays. All of the previous alternative embodiments of sections 1 and 2, such as additional visual diffractive graphics in the overlay could be used with these devices where appropriate.

Figure 22A shows the operation of such a device showing a reflective image display module 185 e.g. a TFT LCD display or similar, consisting of rear glass 191, rear reflector 186 (sometimes the silicon substrate of the device itself), Liquid crystal image forming layer 187, front electrodes and colour filters 188, polariser and outer glass layer 189. the diffractive achromatic enhancer 190 is affixed to this structure by being laminated to the front face. The diffractive achromatic enhancer diffracts ambient white light incident from an overhead light source 6, directs this light approximately normal to be colour filtered, polarisation rotated and reflected back into a diffuse viewing zone 14 where a viewer 11 can observe a uniform achromatic display.

**6.3 :** Due to the surface relief nature of these devices they will also diffract light reflected from the display into unwanted directions, thus apparently reducing the gain. Although, however, this appears a disadvantage initially, in fact these devices have several advantages over the volume devices already disclosed as potential devices to be used as overlays. The maximum efficiency of reflection from the display device will be scale with the grating efficiency and will depend on whether the grating is blazed, though this affect will be reduced by the effect of double diffraction (see enlargement Figure 22B) causing part of the initially undiffracted specularly reflected light to be diffracted into the view zone by a process of double diffraction within certain limits set by colour filter geometry. Therefore for a surface relief grating the maximum diffracted efficiency will be around 25% of the incident light for a fully filled device. However, the advantages these device have over thick film holograms which tend to operate over a narrower band of wavelengths and a narrow angular collection angle is that the relatively lower diffraction efficiency will in practice be cancelled out to a great extent by the much larger angular collection efficiency, so that the device will collect a much larger incident angle of light, and a much larger wavelength range over which the device operates which will in practice cancel out these issues. Another useful aspect and embodiment of the devices is that they will operate as efficiently when illuminated from both directions so providing an all round view capability.

In this device to minimise image degradation due to double diffraction and 'ghost' image offset the unwanted light outside a certain reflection angle from each pixel will be automatically rejected by the display as it traverses two different colour filters and is therefore blocked, and in another embodiment to reduce this effect some optical power could be incorporated into the diffractive or refractive element in the vertical direction (direction of dispersion) by focusing the light to the plane of the rear reflector in the direction of dispersion.

Figure 22B shows an enlargement of the diffractive process showing how the desired normal reflected beam 193 and initially specularly reflected beam 194 can both be diffracted a second time on leaving the device - for the desired normally incidence beam this is a loss but for the unwanted specular reflection this is a gain.

**6.4 :** A very useful embodiment is an all round enhancement film designed to take light and direct onto the display in both vertical and horizontal direction to provide an all round enhancement for a reflective display, enhancing the display viewed directly (normal) using incident light from several directions. Such a device can be constructed by taking the disclosed devices and variations of Section 1 but preferably Section 2 and rotating the orientation of a proportion of the elements to diffract with a side illumination by manufacture in geometry with a side reference beam.

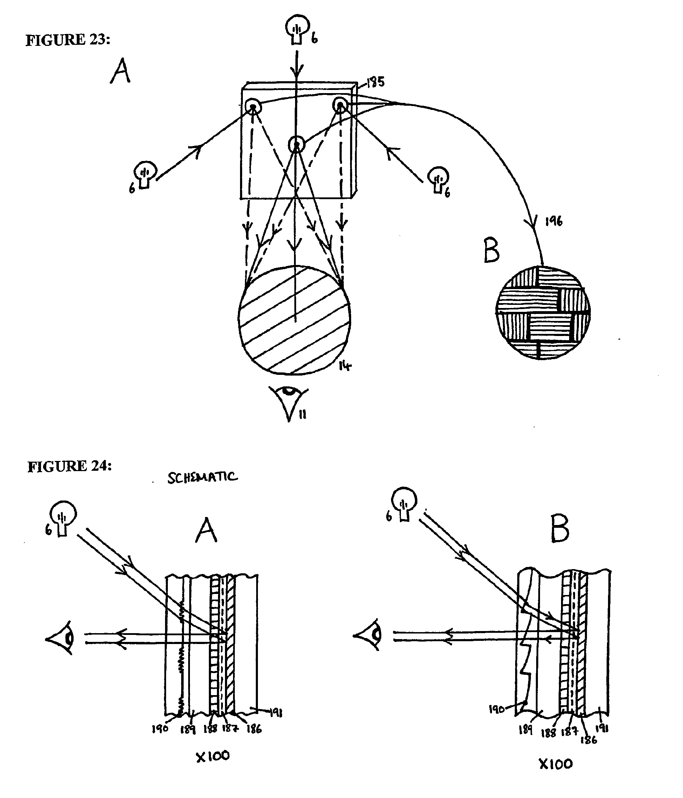

Figure 23 shows how such a device would operate with diffraction operating to enhance the display in both vertically and horizontally incident light to provide a higher acceptance angle for viewing, whilst the enlargement Figure 23B shows the detailed arrangement of different orientations of diffractive areas to achieve this.

**6.5 :** A very useful embodiment is where only a portion of the front face is occupied with diffractive elements and the remainder is not optically active, particularly where this arrangement involves localising the diffractive elements in a series of carefully pitched stripes. Each surface relief diffractive element would then be designed to diffract as efficiently as possible but to diffract the light at a small angle to the normal to the device such that the reflected light from the display excited the device via a non optically active area of the outer device. This can be organised reasonably accurately as the distance from the front surface of an LCD to the rear reflector is very well defined. In this case very high efficiency blazed grating structures can be used over around 50 % of the area providing theoretical diffraction efficiencies overall for gain at around 40 % which is becoming comparable to thick film devices. A key aspect of this device is that the stripes of diffractive elements are of a size beneath the normal resolution of the human eye. In another embodiment the diffractive areas could be arranged in groups of line patches, to avoid moire effect with the pixel structure and in another embodiment the width of the diffractive area and clear areas varies throughout the area of the device either periodically or randomly to avoid moire effects with the pixel pattern. In all these elements the diffractive device would remain an achromatic diffractive diffuser with diffraction and defined diffusion into a viewing zone by a superposition of the replay from small diffraction grating areas or by the replay form distinct diffractive elements preferentially of the direct write type as revealed in section 2 but also possibly of the holographic type as revealed in section 1. An alternative device of this form would involve a front surface partially covered with small prism arrays (e.g. 5 - 10 micron scale, fresnel prism arrangement) arranged to refract incident light from an angle of typically 20 to 30 degrees incidence into the image display device at an angle of 1 to 5 degrees, for reflection and output substantially through the clear (i.e. unstructured) front plane areas. In one embodiment the fresnel prism refractive structure could be combined in the same structure with a diffusing effect - either by simply roughening of the surface or more preferentially a vertical cylindrical structure or cross hatch structure on the surface to provide some horizontal and vertical diffusion. The typical size of the groupings of the prism arrays will be beneath the normal viewing resolution of the unaided human eye, below approximately 250 micron and ideally in the range 25 to 175 micron, to prevent observable degradation of the displayed image. Typically the device will not require registration to the structure and is intended as an overlay. In another embodiment of the device some optical power could be incorporated into the diffractive or refractive element in the vertical direction (direction of dispersion) to minimise image degradation due to double diffraction by focusing the light to the plane of the rear reflector in the direction of dispersion.

In one advantageous embodiment of these device the diffractive or refractive active structure would have a line spacing matched to the pixel spacing on the device and would be registered in a relative position to the pixel structure such that the diffracted or refracted incoming light illuminated the active area of a set of pixels in the designed usage pattern, whose reflected light exited through the planar area of the device, whilst the non active areas of the device remain un-illuminated, to optimise usage of the structures and incident light. This is particularly useful for display devices with surface area partially optically active areas due to circuitry, filters, etc.

A particular advantage of these devices over previous devices is that lack of requirement for registration of the overlay to any particular features on the display.

Figure 24 A show a device according to this aspect, where the achromatic diffractive structure 190 takes up only part of the front face of the device, being arranged in small zones or stripes of a size beneath the eye resolution and shows the reflection behaviour where light is on input is diffracted to a small angle off normal and reflected out through an adj acent small area. Of course as the input angle varies the light can be input and output through stripes several elements away. Figure 24 B shows an equivalent arrangement with small prism devices.

**6.6 :** A useful embodiment for all of the above types of devices in 6.1 through 6.6, including achromatic diffractive diffusers, high efficiency diffractive structures organised across a proportion of the area and refractive small prism arrays organised across part of the area is the incorporation of optical power into the overlay. This is typically required because the overlay is positioned away from and above the rear reflector of the device (typically the TFT silicon itself) to avoid image degradation after multiple diffraction. Typically then a diffractive overlay should incorporate optical power typically being arranged as a series of small diffractive lenses to focus the input light in a close packed array on the rear reflector of the device before subsequently diffusing the light. However, the problem with this type of arrangement is that the diffractive viewing zone can no longer be carefully controlled with controlled diffusion and locally the replay will no longer vary across the device as required as the view cone and is set by the individual diffractive lens array collection angles. A very useful embodiment of this invention is to create a diffractive element that replays a close packed array of focal points from a close packed set of diffractive lenses, where different areas of the array have lenses of the array having different output light cones (i.e. different optical power angular acceptance angle), these properties typically smoothly varying across the devices - the largest differences being at opposite sides of the display where the diffractive lenses would both be replaying into the same viewing zone and would therefore have the largest angular difference. This device, a diffractive, achromatic diffusing array of continuously variable diffractive lenslets formed as a surface relief structure is an improvement over previous devices in terms of improved view zone performance and achromatic and large angular and wavelength acceptance performance and also forms an overlay over the device that does not require any registration to pixels on the device.

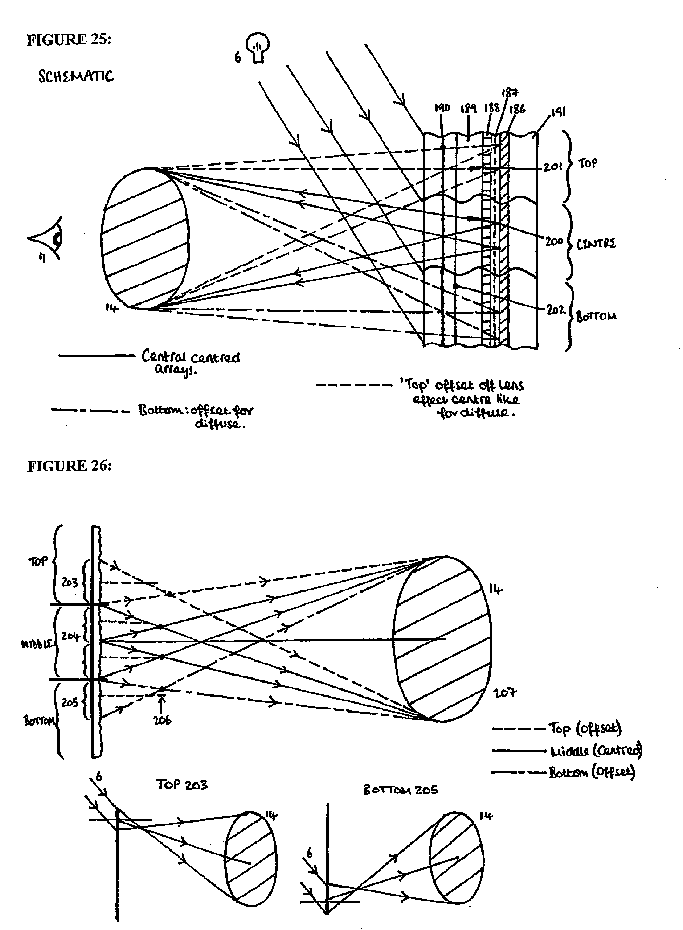

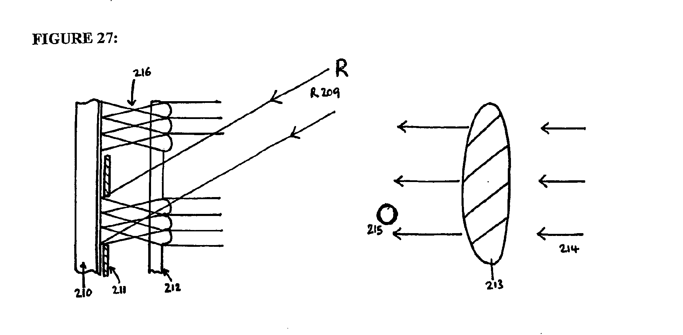

Figures 25 and 26 show the performance of this array of continuously variable performance diffractive lenslets. Figure 25 shows the reflective light path within a display with a reflecting surface 186, showing schematically the positions and performance for top (201), centre (200) and bottom (202) lenslets in the array. This shows how the edge diffusing diffractive lenslets have a substantial off axis performance to ensure they diffract light into a uniform viewing zone. Figure 26 shows the lens optical light paths unfolded showing more clearly the off axis requirements on the edge lenslets, 203,205.

**6.7 :** Particularly the devices detailed here in section 6 in addition to the advantages detailed above are all surface relief devices designed for white light, wide acceptance and wide wavelength performance and are all designed to be overlays over the image enhancing display device that do not require registration to any feature or pixel on the device.

One advantage of these devices of section 6 is that they are capable of being added to the front surface of any image forming display device, such as any TFT liquid crystal display (or similar directly viewed image forming display device) as an adhesively bonded laminated overlay, generally without any tight registration constraints, at a late stage in the production process. This would avoid the need for any additional wafer fabrication stages in the liquid crystal display semi-conductor plant to form any micro optical elements in situ.

## Claims

1. An achromatic diffractive diffuser comprising a plurality of discrete regions of individual surface relief diffractive devices, **characterised in that** each is of a size below the normal visual resolution of an observer and arranged such that, under illumination by ambient light, the superposition of the diffractive effects serves to provide a uniform achromatic diffuser reflection into a defined viewing zone for observation by an observer, and also such that the achromatic replay of the device has a non-symmetric distribution of diffractive light intensity between positive and negative diffractive orders such that the diffraction efficiency in the desired diffractive order is enhanced over that of the undesired order to provide an enhanced brightness achromatic device.

2. A device as claimed in Claim 1, wherein the said region or regions include surface relief diffractive devices in the form of non-overlapping diffractive elements arranged such that upon illumination with ambient light, each diffractive element has a diffractive-replay forming a localised diffuse image in one plane of the device and forming a second image defining a viewing window away from the device and of the same form as that produced by a rainbow hologram, wherein rainbow diffractive replays from the devices are arranged to superimpose such that the diffractive replays provide an achromatic effect for a viewer.

3. A device as claimed in Claim 1 or Claim 2, wherein the individual diffractive devices have one dimension of less than 250 micrometers.

4. A device as claimed in Claim 3, wherein the said one dimension comprises the largest dimension.

5. A device as claimed in Claim 3 or 4, wherein the said one dimension is in the range of 10 to 100 micrometers.

6. A device as claimed in any one or more of Claims 1 to 5, and including at least three non overlapping rainbow diffractive replay diffusing diffractive elements.

7. A device as claimed in Claim 6, wherein the elements are arranged in the form of lines such as curved lines, or in the form of polygons or rectangles.

8. A device as claimed in Claim 6 or 7, wherein the ratios of the spatial sizes of the discrete regions of individual surface relief diffractive devices are determined so as to provide for an achromatic replay.

9. A device as claimed in any one or more of Claims I to 9, and including an additional visual diffractive graphical image visible to an observer under ambient illumination.

10. A device as claimed in Claim 9, wherein the additional image is formed by a region of visual image forming diffractive elements spatially separate from regions providing the achromatic replay and having a size below normal eye resolution.

11. A device as claimed in Claim 10, wherein no visual image forming diffractive clement is present in region unused for the visual image to maintain a uniform achromatic replay.

12. A device as claimed in Claim 9, 10 or 11, wherein the visual graphical image is arranged to be viewable at a different replay angle from the main diffuse image.

13. A device as claimed in Claim 12, and arranged such that the graphical image becomes viewable upon rotating the display device through substantially 90°, in a vertical or horizontal plane.

14. A device as claimed in any one or more of Claims 1 to 13, wherein the areas of the device not occupied by visual image forming diffractive elements are left unused and are arranged not to contribute to the diffractive replay such that the achromatic replay of the overall diffractive device is entirely uniform.

15. A device as claimed in any one or more of claims 1 to 14, and arranged to provide an additional diffusing replay visible outside the diffractive achromatic viewing zone.

16. A device as claimed in Claim 1, further comprising a set of discrete regions of individual surface relief diffractive devices, wherein the discrete regions are non-overlapping and spatially separate from the diffractive elements.

17. A device as claimed in any one or more of the preceding Claims wherein diffractive elements have an asymmetric form and asymmetric diffractive efficiency such that the desired achromatic diffractive replay is enhanced over the undesired diffractive replay.

18. A method of forming a device as claimed in any one or more of Claims 1 to 17,
wherein the surface relief diffractive devices are formed by a synthetic computer generation step.

19. A method of forming a device as claimed in Claim 18 and including the step of direct writing of the diffractive structure by means of electron beam lithography.

20. A method of forming a device as claimed in any one or more of Claims 1 to 17,
wherein the surface relief diffractive structure is formed by holographic generation step.

21. A method of forming a device as claimed in Claim 20 and including the step of holographically generating the surface relief structure by exposing a light sensitive recording medium to laser light comprising a reference beam and a diffused, scattered or projected object beam, such that both object and reference beams are incident on the recording medium from the same side of the normal, and that the resulting surface relief structure has an asymmetric profile and asymmetric diffraction efficiency enhancing the desired diffractive replay.

22. A device as claimed in any one or more of Claims 1 to 17 and arranged such that the projected viewing zone or superposition of viewing zone provides a predetermined smooth intensity gradient at the edge of the viewing zone.

23. A device as claimed in any one or more of Claims 1 to 17 and Claim 22, wherein the diffractive elements comprise diffraction gratings.

24. A device as claimed in claim 23, wherein the diffraction gratings are asymmetric.

25. A device as claimed in any one or more of Claims 1 to 17 and Claims 22 to 24,
wherein the diffractive elements are arranged in sub areas such that each sub-area serves to produce an achromatic diffractive replay by superposition of the diffractive beams.

26. A device as claimed in Claim 25, wherein the viewing zone produced by the said sub-area diffractive elements is arranged to vary across the device according to position so that the same diffracted view zone is produced by all elements of the device despite their different spatial patterns.

27. A device as claimed in Claim 25 or 26, wherein the sub areas consist of several diffraction gratings or diffractive areas having a scale size of 10 to 100 micrometers and having orientations and pitches which are determined so that the superposition of diffractive effects from the areas provides an achromatic replay into the desired viewing zone.

28. A device as claimed in Claims 25, 26 or 27, wherein the sub-areas or elemental areas are arranged as rectangular or polygonal shapes, or as lines such as curved lines.

29. A device as claimed in Claims 25, 26, 27 or 28, and including between 25 and 150 diffractive elements per sub-area and wherein each is **characterized by** variations in pitch and orientation.

30. A device as claimed in any one or more of Claims 1 to 17 and Claims 22 to 29, and including diffusing elements and further arranged to provide achromatic and controlled diffusion to increase the viewing angle, the diffusing elements being spatially separate and offering a means compensating achromatically by not employing those areas so as to keep the diffraction uniform.

31. A device as claimed in Claim 30, and arranged with diffusing areas comprising spatially distinct areas.

32. A display device viewable by reflection and comprising an image-providing display clement including a spatial light modulator arranged to provide an image viewable by the transmission of light there through, and being backed by an achromatic diffractive diffuser device as defined in any one or more of Claims 1 to 17 and Claims 22 to 31 and wherein, upon off-axis illumination of the display device by ambient light, the diffractive diffuser device serves to reflect diffuse light into a defined viewing zone substantially normal to the display device for viewing by an observer.

33. A display device as claimed in Claim 32, and arranged to be viewable by both transmission and reflection and visible under low light conditions in transmission via a back light, wherein the achromatic reflector presents a reflective surface having a plurality of micro holes therein, the display device further including a plurality of micro lenses which serve to concentrate light through the micro holes.

34. A display device as claimed in Claim 33, wherein the micro holes are located in register with the micro lenses.

35. A display device as claimed in Claims 33 or 34, wherein the micro hole position relative to the micro lense position serves to determine an illumination field.

36. A display device as claimed in Claim 33, 34 or 35, wherein the size of each hole is determined so as to homogenize the display.

## Patentansprüche

1. Achromatischer diffraktiver Diffusor, der eine Mehrzahl von diskreten Regionen einzelner diffraktiver Oberflächenrelief-Vorrichtungen umfasst, **dadurch gekennzeichnet, dass** jede eine Größe unter der normalen optischen Auflösung eines Beobachters hat und so angeordnet ist, dass unter Beleuchtung durch Umgebungslicht die Superposition der diffraktiven Effekte dazu dient, eine gleichmäßige achromatische Diffusorreflexion in eine definierte Betrachtungszone zur Beobachtung durch einen Beobachter bereitzustellen, und auch so, dass die achromatische Wiedergabe der Vorrichtung eine nichtsymmetrische Verteilung von diffraktiver Lichtintensität zwischen positiven und negativen diffraktiven Ordnungen hat, so dass der Beugungswirkungsgrad in der gewünschten diffraktiven Ordnung gegenüber dem der unerwünschten Ordnung verbessert wird, um eine achromatische Vorrichtung verbesserter Helligkeit bereitzustellen.

2. Vorrichtung nach Anspruch 1, bei der die genannte Region bzw. genannten Regionen diffraktive Oberflächenrelief-Vorrichtungen in der Form von nichtüberlappenden diffraktiven Elementen aufweist bzw. aufweisen, die so angeordnet sind, dass bei Beleuchtung mit Umgebungslicht jedes diffraktive Element eine diffraktive Wiedergabe hat, die ein lokalisiertes diffuses Bild in einer Ebene der Vorrichtung bildet und ein zweites Bild bildet, das ein Sichtfester von der Vorrichtung weg und von der gleichen Form wie das von einem Regenbogenhologramm erzeugte definiert, wobei diffraktive Regenbogen-Wiedergaben von den Vorrichtungen angeordnet sind, um sich so zu überlagern, dass die diffraktiven Wiedergaben einen achromatischen Effekt für einen Betrachter ergeben.

3. Vorrichtung nach Anspruch 1 oder Anspruch 2, bei der die einzelnen diffraktiven Vorrichtungen eine Abmessung von kleiner als 250 Mikrometern haben.

4. Vorrichtung nach Anspruch 3, bei der die genannte eine Abmessung die größte Abmessung umfasst.

5. Vorrichtung nach Anspruch 3 oder 4, bei der die genannte eine Abmessung im Bereich von 10 bis 100 Mikrometern liegt.

6. Vorrichtung nach einem oder mehreren der Ansprüche 1 bis 5 und mit wenigstens drei nichtüberlappenden streuenden diffraktiven Elementen diffraktiver Regenbogenwiedergabe.

7. Vorrichtung nach Anspruch 6, bei der die Elemente in der Form von Linien wie gekrümmten Linien oder in der Form von Vielecken oder Rechtecken angeordnet sind.

8. Vorrichtung nach Anspruch 6 oder 7, bei der die Verhältnisse der räumlichen Größen der diskreten Regionen einzelner diffraktiver Oberflächenrelief-Vorrichtungen so ermittelt werden, dass sie für eine achromatische Wiedergabe sorgen.

9. Vorrichtung nach einem oder mehreren der Ansprüche 1 bis 9 und mit einem zusätzlichen optischen diffraktiven grafischen Bild, das für einen Beobachter unter Umgebungsbeleuchtung sichtbar ist.

10. Vorrichtung nach Anspruch 9, bei der das zusätzliche Bild von einer Region von optische Bilder formenden diffraktiven Elementen gebildet wird, die räumlich von die achromatische Wiedergabe bereitstellenden Regionen separat sind und eine Größe unter normaler Augenauflösung haben.

11. Vorrichtung nach Anspruch 10, bei der kein optische Bilder formendes diffraktives Element in der nicht für das optische Bild benutzten Region vorhanden ist, um eine gleichmäßige achromatische Wiedergabe aufrecht zu erhalten.

12. Vorrichtung nach Anspruch 9, 10 oder 11, bei der das optische grafische Bild angeordnet ist, so dass es bei einem anderen Wiedergabewinkel von dem Hauptstreubild betrachtet werden kann.

13. Vorrichtung nach Anspruch 12 und so angeordnet, dass das grafische Bild beim Drehen der Anzeigevorrichtung um im Wesentlichen 90° in einer vertikalen oder horizontalen Ebene betrachtbar wird.

14. Vorrichtung nach einem oder mehreren der Ansprüche 1 bis 13, bei der die Bereiche der Vorrichtung, die nicht von optische Bilder formenden diffraktiven Elementen eingenommen werden, unbenutzt gelassen werden und so angeordnet sind, dass sie nicht zu der diffraktiven Wiedergabe beitragen, so dass die achromatische Wiedergabe der gesamten diffraktiven Vorrichtung vollkommen gleichmäßig ist.

15. Vorrichtung nach einem oder mehreren der Ansprüche 1 bis 14 und angeordnet, um eine zusätzliche streuende Wiedergabe bereitzustellen, die außerhalb der diffraktiven achromatischen Betrachtungszone sichtbar ist.

16. Vorrichtung nach Anspruch 1, die ferner einen Satz diskreter Regionen einzelner diffraktiver Oberflächenrelief-Vorrichtungen umfasst, wobei die diskreten Regionen nichtüberlappend und räumlich von den diffraktiven Elementen separat sind.

17. Vorrichtung nach einem oder mehreren der vorhergehenden Ansprüche, bei der diffraktive Elemente eine asymmetrische Form und einen asymmetrischen Beugungswirkungsgrad haben, so dass die gewünschte achromatische diffraktive Wiedergabe gegenüber der unerwünschten diffraktiven Wiedergabe verbessert wird.

18. Verfahren zum Herstellen einer Vorrichtung nach einem oder mehreren der Ansprüche 1 bis 17, bei der die diffraktiven Oberflächenrelief-Vorrichtungen mit einem synthetischen Computergenerierungsschritt hergestellt werden.

19. Verfahren zum Herstellen einer Vorrichtung nach Anspruch 18 und mit dem Schritt des direkten Schreibens der diffraktiven Struktur mit Hilfe von Elektronenstrahllithografie.

20. Verfahren zum Herstellen einer Vorrichtung nach einem oder mehreren der Ansprüche 1 bis 17, bei der die diffraktive Oberflächenrelief-Struktur mit einem Hologrammgenerierungsschritt hergestellt wird.

21. Verfahren zum Herstellen einer Vorrichtung nach Anspruch 20, die den Schritt des holographischen Generierens der Oberflächenreliefstruktur durch Belichten eines lichtempfindlichen Aufzeichnungsmediums mit Laserlicht aufweist, das einen Referenzstrahl und einen diffusen, gestreuten oder projizierten Objektstrahl umfasst, so dass sowohl (Objekt- als auch Referenzstrahl von der gleichen Seite der Normalen auf das Aufzeichnungsmedium einfallen und dass die resultierende Oberflächenreliefstruktur ein asymmetrisches Profil und einen asymmetrischen Beugungswirkungsgrad hat, die die gewünschte diffraktive Wiedergabe verbessern.

22. Vorrichtung nach einem oder mehreren der Ansprüche 1 bis 17, die so angeordnet ist, dass die projizierte Betrachtungszone oder Betrachtungszonensuperposition einen vorbestimmten glatten Intensitätsgradienten am Rand der Betrachtungszone bereitstellt.

23. Vorrichtung nach einem oder mehreren der Ansprüche 1 bis 17 und Anspruch 22, bei der die diffraktiven Elemente Beugungsgitter umfassen.

24. Vorrichtung nach Anspruch 23, bei der die Beugungsgitter asymmetrisch sind.

25. Vorrichtung nach einem oder mehreren der Ansprüche 1 bis 17 und der Ansprüche 22 bis 24, bei der die diffraktiven Elemente in Unterbereichen angeordnet sind, so dass jeder Unterbereich zum Erzeugen einer achromatischen diffraktiven Wiedergabe durch Superposition der diffraktiven Strahlen dient.

26. Vorrichtung nach Anspruch 25, bei der die von den genannten diffraktiven Unterbereichs-Elementen erzeugte Betrachtungszone die Aufgabe hat, positionsgemäß über die Vorrichtung zu variieren, so dass die gleiche gebeugte Betrachtungszone von allen Elementen der Vorrichtung erzeugt wird, trotz ihrer verschiedenen räumlichen Muster.

27. Vorrichtung nach Anspruch 25 oder 26, bei der die Unterbereiche aus mehreren Beugungsgittern oder diffraktiven Bereichen mit einer Maßstabsgröße von 10 bis 100 Mikrometern und mit Ausrichtungen und Steigungen bestehen, die so ermittelt sind, dass die Superposition von diffraktiven Effekten von den Bereichen eine achromatische Wiedergabe in die gewünschte Betrachtungszone ergibt.

28. Vorrichtung nach einem der Ansprüche 25, 25 oder 27, bei der die Unterbereiche oder Elementarbereiche als rechteckige oder vieleckige Formen oder als Linien wie gekrümmte Linien angeordnet sind.

29. Vorrichtung nach einem der Ansprüche 25, 26, 27 oder 28 und mit zwischen 25 und 150 diffraktiven Elementen pro Unterbereich, wobei jedes durch Steigungs- und Ausrichtungsvariationen **gekennzeichnet** ist.

30. Vorrichtung nach einem oder mehreren der Ansprüche 1 bis 17 und der Ansprüche 22 bis 29, die Streuelemente ausweist und ferner angeordnet ist, um achromatische und geregelte Streuung zum Vergrößern des Betrachtungswinkels bereitzustellen, wobei die Streuelemente räumlich separat sind und ein Mittel zum achromatischen Ausgleichen bieten, indem jene Bereiche nicht eingesetzt werden, um die Diffraktion gleichmäßig zu halten.

31. Vorrichtung nach Anspruch 30, die mit räumlich unterschiedliche Bereiche umfassenden Streubereichen angeordnet ist.

32. Anzeigevorrichtung, die durch Reflexion betrachtet werden kann und ein bildlieferndes Anzeigeelement umfasst mit einem rämlichen Lichtmodulator, der angeordnet ist, um ein durch die Lichttransmission durch ihn hindurch betrachtbares Bild bereitzustellen, und von einer achromatischen diffraktiven Diffusorvorrichtung nach einem oder mehreren der Ansprüche 1 bis 17 und der Ansprüche 22 bis 31 unterstützt wird, und wobei die diffraktive Diffusorvorrichtung bei achsenentfernter Beleuchtung der Anzeigevorrichtung durch Umgebungslicht zum Reflektieren von Streulicht in eine definierte Betrachtungszone im Wesentlichen senkrecht zu der Anzeigevorrichtung zum Betrachten durch einen Beobachter dient.

33. Anzeigevorrichtung nach Anspruch 32, die angeordnet ist, um durch Transmission und Reflexion betrachtet werden zu können und unter geringen Restlichtbedingungen in Transmission durch ein Hintergrundlicht sichtbar ist, wobei der achromatische Reflektor eine reflektierende Oberfläche präsentiert, in der sich eine Mehrzahl von Mikrolöchem befinden, wobei die Anzeigevorrichtung ferner eine Mehrzahl von Mikrolinsen aufweist, die zum Konzentrieren von Licht durch die Mikrolöcher dienen.

34. Anzeigevorrichtung nach Anspruch 33, bei der die Mikrolöcher passgenau mit den Mikrolinsen angeordnet sind.

35. Anzeigevorrichtung nach Ansprüchen 33 oder 34, bei der die Mikrolochposition relativ zur Mikrolinsenposition zum Ermitteln eines Beleuchtungsfelds dient.

36. Anzeigevorrichtung nach Anspruch 33, 34 oder 35, bei der die Größe jedes Lochs ermittelt ist, um die Anzeige zu vergleichmäßigen.

## Revendications

1. Un dispositif diffractif achromatique de diffuseur comportant de nombreuses zones discrètes de différents dispositifs diffractifs de relief de la surface chacune d'une taille au-dessous de la résolution visuelle normale d'un observateur et disposées tels que, sous l'illumination par la lumière ambiante, la superposition des effets diffractifs sert à fournir une réflexion diffuse achromatique uniforme dans une zone de visionnement définie pour l'observation par un observateur, et également tel que les effets diffractifs achromatiques du dispositif ont une distribution dissymétrique d'intensité de la lumière diffractive entre l'ordre diffractif positif et l'ordre diffractif négatif telle que l'efficacité diffractive dans l'ordre diffractif désiré est augmenté par rapport à l'ordre non désiré pour fournir un dispositif achromatique à brillance augmentée.

2. Un dispositif comme réclamé dans la Réclamation 1, où la / les dite(s) zone ou zones incluent le relief de la surface les dispositifs diffractifs sous forme d'éléments diffractifs non-recouverts arrangés tels que lors de l'illumination avec la lumière ambiante, chaque élément diffractif a un effet diffractif forment une image diffuse localisée dans une ruelle du dispositif et forment une deuxième image définissant une fenêtre de visionnement loin du dispositif et de la même forme que cela produite par un hologramme d'arc-en-ciel, où l'effet arc-en-ciel diffractif des dispositifs est arrangé de sorte à se superposer tels que les effets diffractifs fournissent un effet achromatique pour un observateur.

3. Un dispositif comme réclamé dans les Réclamations 1 ou 2 où les différents dispositifs diffractifs ont une dimension de moins de 250 microns

4. Un dispositif comme réclamé dans la Réclamation 3, où la dite dimension est la dimension la plus grande.

5. Un dispositif comme réclamé dans les Réclamations 3 ou 4, où la dite dimension est entre 10 à 100 microns

6. Un dispositif comme réclamé dans une ou plusieurs des Réclamations 1 à 5, et qui comprend au moins trois éléments diffractifs d'effets d'arc-en-ciel non-recouverts diffractifs.

7. Un dispositif comme réclamé dans la Réclamation 6, où les éléments sont rangés dans une forme de lignes comme des lignes incurvées, ou dans une forme de polygones ou de rectangles.

8. Un dispositif comme réclamé dans les Réclamations 6 ou 7, où les rapports des tailles spatiales des zones discrètes de différents dispositifs diffractifs de relief de la surface sont déterminés afin de prévoir un effet achromatique.

9. Un dispositif comme réclamé dans une ou plusieurs des Réclamations 1 à 9, qui inclut une image graphique diffractive visuelle additionnelle évidente à un observateur sous la lumière ambiante.

10. Un dispositif comme réclamé dans la Réclamation 9, où l'image additionnelle est constituée par une zone d'image visuelle formant les éléments diffractifs dans l'espace séparé des zones fournissant l'effet achromatique et ayant une taille au-dessous de la résolution normale d'oeil.

11. Un dispositif comme réclamé dans la Réclamation 10, où aucune image visuelle formant l'élément diffractif n'est présente dans une zone inutilisée pour l'image visuelle pour maintenir un effet achromatique constant.

12. Un dispositif comme réclamé dans les Réclamations 9, 10 ou 11, où l'image graphique visuelle est rangée de sorte à être visible à un angle d'émission différent par rapport à l'image diffuse principale.

13. Un dispositif comme réclamé dans la Réclamation 12, et rangé de sorte que l'image graphique devienne visible lorsqu'on tourne le dispositif graphique par essentiellement 90 degrés, dans un plan vertical ou horizontal.

14. Un dispositif comme réclamé dans une ou plusieurs des Réclamations 1 à 13, où les secteurs du dispositif non occupés par les éléments qui forment diffractifs des images visuelles sont laissées inutilisés et sont arrangées pour ne pas contribuer à l'effet diffractif tels que l'effet achromatique du dispositif diffractif global est entièrement constant.

15. Un dispositif comme réclamé dans une ou plusieurs des Réclamations 1 à 14, et arrangé de sorte à fournir un effet supplémentaire de diffuseur qui est visible hors de la zone de visibilité diffractif achromatique.

16. Un dispositif comme réclamé dans la Réclamation 1, qui comprend en plus un ensemble de zones discrètes de différents dispositifs diffractifs de relief de la surface, où les zones discrètes sont non-recouvertes et géographiquement séparées des éléments diffractifs.

17. Un dispositif comme réclamé dans une ou plusieurs des Réclamations précédentes, où les éléments diffractifs ont une forme asymétrique et une efficacité diffactive asymétrique tels que l'effet achromatique désiré est augmenté par rapport à l'effet dififractif non désiré.

18. Une méthode de faire un dispositif comme réclamé dans une ou plusieurs des Réclamations 1 à 17, où les dispositifs diffractifs de relief de la surface sont constitués par un procédé de génération synthétique à ordinateur.

19. Une méthode de faire un dispositif comme réclamé dans la Réclamation 18 et qui comprend le procédé d'écriture directe de la structure diffractif par lithographie de faisceau d'électrons.

20. Une méthode de faire un dispositif comme réclamé dans une ou plusieurs des Réclamations 1 à 17, où le structure diffractif de relief de surface est faite par génération holographique.

21. Une méthode de faire un dispositif comme réclamé dans la Réclamation 20 et qui comprend le fait de créer holographiquement la structure de relief de la surface en exposant un support d'enregistrement sensible à la lumière de laser qui comporte un faisceau de référence et un faisceau d'objet diffus, dispersé ou projeté, tel que le faisceau d'objet et le faisceau de référence incident sur 1 e support d'enregistrement du même côté de la normale, et que la structure résultante de relief de la surface a un profil asymétrique et une efficacité de diffraction asymétrique augmentant l'effet diffractif désiré.

22. Un dispositif comme réclamé dans une ou plusieurs des Réclamations 1 à 17 et arrangé tel que la zone ou la superposition de visionnement projetée de la zone de visionnement fournit un gradient d'intensité doux et prédéterminé au bord de la zone de visionnement.

23. Un dispositif comme réclamé dans une ou plusieurs des Réclamations 1 à 17 et/où la Réclamation 22, où les éléments diffractifs comprennent des râpages de diffraction.

24. Un dispositif comme réclamé dans la Réclamation 23, où les des râpages de diffraction sont asymétriques.

25. Un dispositif comme réclamé dans une ou plusieurs des Réclamations 1 à 17 et/où les Réclamations 22 à 24, où les éléments diffractifs sont arrangés dans des zones secondaires tels que chaque zone secondaire produit un effet achromatique par la superposition des faisceaux diffractifs.

26. Un dispositif comme réclamé dans la Réclamation 25, où la zone de visionnement produit par les dits éléments diffractifs de zone secondaire est arrangée de sorte à changer à travers le dispositif selon la position de manière que la même zone diffractée de vue soit produite par tous les éléments du dispositif malgré leurs différents modèles spatiaux.

27. Un dispositif comme réclamé dans les Réclamations 25 ou 26, où les zones secondaires consistent en des réseaux de diffraction ou zones diffractives ayant une taille d'échelle de 10 à 100 microns et ayant des orientations et des lancements qui sont déterminés de sorte que la superposition des effets diffractifs des zones fournisse un effet achromatique dans la zone de visionnement désirée.

28. Un dispositif comme réclamé dans les Réclamations 25, 26 ou 27, où les zones secondaires ou les zones d'éléments sont arrangées en des formes rectangulaires ou polygonales, ou bien des lignes telles que des lignes incurvées.

29. Un dispositif comme réclamé dans les Réclamations 25, 26, 27 ou 28, et qui inclut entre 25 et 150 éléments diffractifs par zone secondaire et où chacun des dits éléments est **caractérisé par** des changements de distance et d'orientation.

30. Un dispositif comme réclamé dans une ou plusieurs des Réclamations 1 à 17 et/où les Réclamations 22 à 29, et qui inclut des éléments diffuseurs et qui en plus et arrangé de manière à fournir une diffusion achromatique et contrôlée pour augmenter l'angle de visionnement, les éléments diffuseurs étant séparés spatialement et offrant un moyen qui compense achromatiquement en ne pas utilisant ces secteurs afin de maintenir la diffraction uniforme.

31. Un dispositif comme réclamé dans la Réclamation 30, et arrangé avec des zones diffuseures comprenant des zones spatialement particulières.

32. Un dispositif d'affichage visible par réflexion et qui comporte un élément graphique qui fournit une image, comprenant un modulateur de lumière spatial arrangé de manière à fournir une image visible par la transmission de la lumière par-là, et étant soutenu par un dispositif diffractif achromatique de diffuseur comme défini dans une ou plusieurs des Réclamations 1 à 17 et / où les Réclamations 22 à 31 et où, sur l'illumination d'au loin-axe du dispositif d'affichage par la lumière ambiante, les services diffractifs de dispositif de diffuseur pour réfléchir la lumière diffuse dans une zone de visionnement définie essentiellement normale au dispositif d'affichage pour regarder par un observateur.

33. Un dispositif d'affichage comme réclamé dans la Réclamation 32, et arrangé pour être visible par et la transmission et la réflexion et qui est visible sous des conditions de lumière basse en transmission via une lumière derrière, où le réflecteur achromatique présente une surface réflective ayant de nombreux très petits trous là-dedans, le dispositif d'affichage incluant en plus de nombreux très petits objectifs qui servent à concentrer la lumière par les dits très petits trous.

34. Un dispositif d'affichage comme réclamé dans la Réclamation 33, où les très petits trous sont situés en repère avec les très petits objectifs.

35. Un dispositif d'affichage comme réclamé dans les Réclamations 33 ou 34, où la position des très petits trous relative à la position des très petits objectifs sert à fixer un plan d'illumination.

36. Un dispositif d'affichage comme réclamé dans les Réclamations 33, 34 ou 35, où la taille de chaque trou est fixée de manière à homogénéiser le dispositif.
